# EUROPEAN PATENT SPECIFICATION

(11) **EP 1 426 939 B1**
(45) Date of publication and mention of the grant of the patent: **15.10.2008**
(21) Application number: 02702778.8
(22) Date of filing: 07.03.2002
(51) Int. Cl.: G11B 7/24, G11B 7/004, B41M 5/26

(54) **OPTICAL INFORMATION RECORDING MEDIUM**
OPTISCHES INFORMATIONSAUFZEICHNUNGSMEDIUM
SUPPORT OPTIQUE D'ENREGISTREMENT D'INFORMATIONS

(30) Priority: 12.09.2001 JP 2001276281
(43) Date of publication of application: 09.06.2004
(73) Proprietor: MATSUSHITA ELECTRIC INDUSTRIAL CO., LTD., Kadoma-shi, Osaka-fu 571-8501 (JP)
(72) Inventor: NISHIHARA, Takashi, Hirakata-shi, Osaka 573-1118 (JP); KOJIMA, Rie, Kadoma-shi, Osaka 571-0030 (JP); YAMADA, Noboru, Hirakata-shi, Osaka 573-1104 (JP)
(74) Representative: Jeffrey, Philip Michael
(86) International application number: PCT/JP2002/002099
(87) International publication number: WO 2003/025922

(56) References cited:
- EP-A- 1 052 632
- EP-A- 1 172 811
- EP-A- 1 187 119
- JP-A- 2000 222 777
- JP-A- 2000 235 733
- JP-A- 2001 243 655
- JP-A- 2002 144 736
- US-B1- 6 190 750

## Description

### Technical Field

The present invention relates to an optical information recording medium that includes a plurality of information layers and records, erases, rewrites or reproduces information optically by irradiation with a laser beam.

### Background Art

As an optical information recording medium that records, erases, rewrites or reproduces information using a laser beam, there is a phase-change type optical information recording medium. The phase-change type optical information recording medium uses a phenomenon in which its recording layer is changed reversibly between a crystal phase and an amorphous phase, for recording, erasing and rewriting information. Generally, in the case of recording information, a recording layer is melted by irradiation with a laser beam having a high power (recording power), followed by rapid cooling, whereby an irradiated portion is changed to an amorphous phase to record information. On the other hand, in the case of erasing information, a recording layer is raised in temperature by irradiation with a laser beam having a power (erasing power) lower than that in recording, followed by gradual cooling, whereby an irradiated portion is changed to a crystal phase to erase the previously recorded information. Thus, in the phase-change type optical information recording medium, a recording layer is irradiated with a laser beam with its power modulated between a high power level and a low power level, whereby new information can be recorded while recorded information is being erased (for example, see "Fundamentals and Application of Optical Disk Storage", Yoshihito Sumida et al., The Institute of Electronics, Information and Communication Engineers, 1995, Chapter 2).

In recent years, various techniques of increasing the capacity of an optical information recording medium have been studied. For example, the following technique has been studied: a spot diameter of a laser beam is decreased by using a violet laser with a wavelength shorter than that of a conventional red laser or by thinning a substrate on an incident side of a laser beam and using an objective lens with a large numerical aperture (NA), whereby recording is performed with high density. The following technique also has been studied: an optical information recording medium having two information layers is used, and recording/reproducing is performed with respect to the two information layers with a laser beam incident from one side thereof (see JP 2000-36130 A). According to this technique, the recording capacity of an optical information recording medium can be almost doubled by using two information layers.

EP-A-1172811, which is comprised in the state of the art pursuant to Article 54(3) EPC, discloses a two-layer information recording medium. Ups-13-6190750 relates to a double layer optical information medium. The present invention has been characterised over the disclosure of US-B-6190750.

In the optical information recording medium (hereinafter, which may be referred to as a two-layer optical information recording medium) for performing recording/reproducing with respect to two information layers from one side thereof, a laser beam transmitted through an information layer (hereinafter, which may be referred to as a first information layer) on a laser beam incident side is used to perform recording/reproducing with respect to an information layer (hereinafter, which may referred to as a second information layer) on the opposite side of the laser beam incident side. Therefore, it is preferable that the first information layer has as high a transmittance as possible.

In the optical information recording medium, a first information layer may be used, which includes a recording layer and a reflection layer in this order from a laser beam incident side. The reflection layer diffuses heat generated in the recording layer by irradiation with a laser beam and enables light to be absorbed in the recording layer effectively. In order to increase the transmittance of the first information layer, an information layer is being studied that includes a transmittance adjusting layer made of a dielectric on a surface of the reflection layer opposite to the laser beam incident side (JP 2000-222777 A).

Furthermore, in order to increase the laser beam transmittance of the first information layer, it is required to substantially decrease the thickness of the recording layer. However, when the recording layer becomes thin, the number of crystal cores to be formed when the recording layer is crystallized is decreased, and furthermore, the distance in which atoms can move is shortened. Therefore, there is a tendency for the crystallization speed to be decreased relatively even with the same material. Thus, as the thickness of the recording layer is smaller, a crystal phase becomes more unlikely to be formed, which decreases an erasure ratio.

Conventionally, as the material (phase-change material) for the recording layer, a highly reliable Ge-Sb-Te ternary material, which has a high crystallization speed and is excellent in repeated rewriting performance, has been used. Using this material, optical disks for recording data in a computer and optical disks for recording a video are produced commercially. Among the Ge-Sb-Te ternary material, a pseudo binary composition on a GeTe-Sb₂Te₃ line has the highest crystallization speed. Therefore, even in the case where the recording layer is very thin, a satisfactory erasure ratio is obtained with this material.

In order to increase the capacity of the optical information recording medium, it is desired to put a two-layer optical information recording medium that performs recording/reproducing with a violet laser into practical use. In such a recording medium, by using a laser beam with a wavelength shorter than that of the conventional example and an objective lens having a numerical aperture (NA) larger than that of the conventional example, a spot diameter of a laser beam can be decreased, and recording can be performed with higher density. In order to perform recording with a decreased spot diameter, it is required to obtain an optical information recording medium capable of forming a small recording mark in a satisfactory shape. When recording is performed with a decreased spot diameter, the time for irradiating a recording layer with a laser beam is shortened relatively. Therefore, in order to form a small recording mark, it is required to form a recording layer with a material having a high crystallization speed. Furthermore, in order to obtain a sufficient signal amplitude even with a small recording mark, it is desirable to form a recording layer with a material whose optical characteristics are changed greatly between a crystal phase and an amorphous phase.

Furthermore, in the case of performing recording/reproducing with a violet laser, the energy of laser light becomes larger than that in the case of using a red laser. Therefore, there is a tendency that the light absorption by a multi-layer film forming an information layer is increased. More specifically, with the wavelength of a violet laser, the transmittance of an information layer tends to be decreased.

In the case of the two-layer optical information recording medium, as described above, a laser beam transmitted through the first information layer is used for performing recording/reproducing with respect to the second information layer. Therefore, a laser power required for recording information on the second information layer is obtained by dividing the recording power required in the second information layer by the transmittance of the first information layer. Herein, assuming that the recording power required when the second information layer is present alone is 6 mW, and the transmittance of the first information layer is 46% or less, the laser power required for performing recording with respect to the second information layer is 13.0 mW or more. At present, the power of an available violet semiconductor laser is about 50 mW. However, due to the loss by an optical system such as a lens, the power irradiated to the optical information recording medium becomes about 1/4 (i.e., at most 12.5 mW). Therefore, it is required that the transmittance of the first information layer is more than 46%.

Furthermore, according to the experiment by the inventors of the present invention, it is known that in order to obtain a large signal amplitude even with a small spot diameter, it is effective to increase the ratio of GeTe in a pseudo binary composition on a GeTe-Sb₂Te₃ line that is a material for the recording layer. However, as the ratio of GeTe is increased, the melting point of the material tends to be increased. Therefore, the laser power (recording power) required for forming an amorphous phase is increased further. In the case of forming a recording layer of the second information layer with a material having a composition containing a large amount of GeTe, when the transmittance of the first information layer is 46% or less, the power of a laser is insufficient in the second information layer. As a result, a saturated signal amplitude cannot be obtained in the second information layer.

Thus, it is found that it is important to increase the transmittance of the first information layer in the two-layer optical information recording medium using a violet laser, and in particular, the transmittance is set at more than 46%. Thus, in order to put the two-layer optical information recording medium using a violet laser into practical use, the first information layer is required, which has a high transmittance at the wavelength of a violet laser.

In view of the above-mentioned circumstance, the object of the prevention is to provide an optical information recording medium including a plurality of information layers and being capable of performing recording/reproducing satisfactorily with a violet laser

In accordance with first and second aspects of the present invention there is provided an optical information recording medium as defined in claim 1.

A first preferred embodiment of an optical information recording medium of the present invention for recording and reproducing information by irradiation with a laser beam having a wavelength λ of 450 nm or less, includes: a substrate; and a plurality of information layers formed on the substrate, wherein a first information layer closest to an incident side of the laser beam among the plurality of information layers includes a recording layer, a reflection layer and a transmittance adjusting layer in this order from the incident side, the recording layer is reversibly changed between a crystal phase and an amorphous phase by irradiation with the laser beam, assuming that a transmittance of the first information layer at the wavelength λ in a case of the recording layer in a crystal phase is Tc1 (%) and a transmittance of the first information layer at the wavelength λ in a case of the recording layer in an amorphous phase is Ta1 (%), Tc1 and Ta1 satisfy 46 < Tc1 and 46 < Ta1, and assuming that a refractive index and an extinction coefficient of the transmittance adjusting layer at the wavelength λ are n1 and k1, respectively, and a refractive index and an extinction coefficient of the reflection layer at the wavelength λ are n2 and k2, respectively, n1, k1, n2 and k2 satisfy 1.5 ≤ (n1 - n2) and 1.5 ≤ (k2 - k1). In the first optical information recording medium, the multi-layer optical information recording medium obtained has a high transmittance of the first information layer and satisfactory recording/reproducing characteristics.

A second preferred embodiment of an optical information recording medium of the present invention for recording and reproducing information by irradiation with a laser beam having a wavelength λ of 450 nm or less, includes: a substrate; and a plurality of information layers formed on the substrate, wherein a first information layer closest to an incident side of the laser beam among the plurality of information layers includes a recording layer, a reflection layer and a transmittance adjusting layer in this order from the incident side, the recording layer is reversibly changed between a crystal phase and an amorphous phase by irradiation with the laser beam, assuming that a transmittance of the first information layer at the wavelength λ in a case of the recording layer in a crystal phase is Tc1 (%) and a transmittance of the first information layer at the wavelength λ in a case of the recording layer in an amorphous phase is Ta1 (%), Tc1 and Ta1 satisfy 46 < Tc1 and 46 < Ta1, and the transmittance adjusting layer contains an oxide of Ti as a main component. In the second optical information recording medium, the multi-layer optical information recording medium obtained has a high transmittance of the first information layer and satisfactory recording/reproducing characteristics.

In the above-mentioned first optical information recording medium, the refractive index n1 and the extinction coefficient k1 of the transmittance adjusting layer may satisfy 2.4 ≤ n1 and k1 ≤ 0.1. According to this configuration, the transmittance of the first information layer can be increased further.

In the above-mentioned first optical information recording medium, the refractive index n2 and the extinction coefficient k2 of the reflection layer satisfy n2 s 2.0 and 1.0 ≤ k2. According to this configuration, the reflectance of the first information layer can be increased further.

In the optical information recording medium of the present invention, assuming that a reflectance of the first information layer at the wavelength λ in the case of the recording layer in a crystal phase is Rc1 (%), and a reflectance of the first information layer at the wavelength λ in the case of the recording layer in an amorphous phase is Ra1 (%), the Rc1 and the Ra1 may satisfy Ra1 < Rc1 and 0.1 ≤ Ra1 ≤ 5. Furthermore, the Rc1 and the Ra1 may satisfy Ra1 < Rc1 and 4 ≤ Rc1 ≤ 15. According to these configurations, the reflectance difference (Rc1 - Ra1) of the first information layer can be increased, and satisfactory recording/reproducing characteristics are obtained.

In the optical information recording medium of the present invention, the transmittance Tc1 and the transmittance Ta1 may satisfy -5 ≤ (Tc1 - Ta1) ≤ 5. According to this configuration, irrespective of the state of the recording layer of the first information layer, the transmittance thereof is substantially uniform. Therefore, satisfactory recording/reproducing characteristics are obtained in the information layers other than the first information layer.

In the above-mentioned first optical information recording medium, the transmittance adjusting layer may contain at least one selected from the group consisting of TiO₂, ZrO₂, ZnO, Nb₂O₅, Ta₂O₅, SiO₂, Al₂O₃, Bi₂O₃, Cr-N, Ge-Si-N, Ge-Cr-N and ZnS. In this case, a thickness d1 of the transmittance adjusting layer and the wavelength λ may satisfy (1/32)λ/n1 ≤ d1 s (3/16)λ/n1 or (17/32)λ/n1 ≤ d1 ≤ (11/16)λ/n1. Furthermore, a thickness d1 of the transmittance adjusting layer may be in a range of 5 nm to 30 nm or in a range of 80 nm to 100 nm. According to these configurations, the transmittance of the first information layer can be increased further.

In the optical information recording medium of the present invention, the recording layer may be made of a material represented by a composition formula: GeₐSb_{b}Te₃₊ₐ (where 0 < a ≤ 25, 1.5 ≤ b ≤ 4). According to this configuration, even in a case where the recording layer is thin, satisfactory recording/reproducing performance can be obtained.

In the optical information recording medium of the present invention, the recording layer may be made of a material represented by a composition formula: (Ge-M1)ₐSb_{b}Te₃₊ₐ (where M1 is at least one element selected from the group consisting of Sn and Pb; 0 < a ≤ 25; 1.5 ≤ b ≤4). According to this configuration, Sn or Pb substituting for Ge of a Ge-Sb-Te ternary composition enhances crystallization performance. Therefore, even in the case where the recording layer is very thin, a sufficient erasure ratio is obtained.

In the optical information recording medium of the present invention, the recording layer may be made of a material represented by a composition formula: (GeₐSb_{b}Te₃₊ₐ)_{100-c}M2_{c} (where M2 is at least one element selected from the group consisting of Si, Ti, V, Cr, Mn, Fe, Co, Ni, Cu, Se, Zr, Nb, Mo, Ru, Rh, Pd, Ag, In, Sn, Ta, W, Os, Ir, Pt, Au and Bi; 0 < a ≤ 25; 1.5 ≤ b ≤ 4; 0 < c ≤ 20). According to this configuration, an element M2 added to a Ge-Sb-Te ternary composition raises the melting point and the crystallization temperature of the recording layer, thereby enhancing the thermal stability of the recording layer.

In the optical information recording medium of the present invention the recording layer may be made of a material represented by a composition formula: (SbₓTe₁₀₀₋ₓ)_{100-y}M3_{y} (where M3 is at least one element selected from the group consisting of Ag, In, Ge, Sn, Se, Bi, Au and Mn; 50 ≤ x ≤ 95; 0 < y ≤ 20). According to this configuration, the reflectance difference (Rc1 - Ra1) of the first information layer can be increased, and satisfactory recording/reproducing characteristics are obtained.

In the optical information recording medium of the present invention, a thickness of the recording layer may be in a range of 1 nm to 9 nm. According to this configuration, the transmittance of the first information layer can be increased further.

In the optical information recording medium of the present invention, the reflection layer may contain at least one element selected from the group consisting of Ag, Au, Cu and Al, and a thickness d2 of the reflection layer may be in a range of 3 nm to 15 nm. According to this configuration, the reflection layer having a high heat conductivity can diffuse heat generated in the first information layer, in particular the recording layer, by irradiation with a laser beam. Furthermore, optically, the reflectance of the first information layer can be increased.

The optical information recording medium of the present invention further may include an upper side protection layer disposed on an interface between the recording layer and the reflection layer, and the upper side protection layer may contain at least one selected from the group consisting of TiO₂, ZrO₂, ZnO, Nb₂O₅, Ta₂O₅, SiO₂, Al₂O₃, Bi₂O₃, C-N, Ti-N, Zr-N, Nb-N, Ta-N, Si-N, Ge-N, Cr-N, Al-N, Ge-Si-N, Ge-Cr-N, ZnS, SiC and C. In this case, a refractive index n3 and a thickness d3 of the upper side protection layer and the wavelength λ may satisfy (1/64)λ/n₃ ≤ d3 ≤ (15/64)λ/n3. Furthermore, a thickness d3 of the upper side protection layer may be in a range of 2 nm to 40 nm. According to these configurations, the optical characteristics of the first information layer can be adjusted, and furthermore, heat generated in the recording layer can be diffused effectively.

The optical information recording medium of the present invention further may include an interface layer disposed on an interface between the upper side protection layer and the first recording layer, and the interface layer may contain at least one selected from the group consisting of C-N, Ti-N, Zr-N, Nb-N, Ta-N, Si-N, Ge-N, Cr-N, Al-N, Ge-Si-N, Ge-Cr-N and C. According to this configuration, the movement of a substance between the upper side protection layer and the recording layer caused by repeated recording can be prevented, and satisfactory repeated recording performance can be obtained. Furthermore, the interface layer also has a function of promoting the crystallization of the recording layer.

In the optical information recording medium of the present invention, the first information layer further may include a lower side protection layer disposed on the incident side with respect to the recording layer. According to this configuration, the lower side protection layer can prevent the oxidation, corrosion, deformation and the like of the recording layer. Furthermore, the optical characteristics of the first information layer can be adjusted.

The optical information recording medium of the present invention further may include an interface layer disposed on an interface between the lower side protection layer and the recording layer, wherein the interface layer may contain at least one selected from the group consisting of C-N, Ti-N, Zr-N, Nb-N, Ta-N, Si-N, Ge-N, Cr-N, Al-N, Ge-Si-N, Ge-Cr-N and C. According to this configuration, the movement of a substance between the lower side protection layer and the recording layer caused by repeated recording can be prevented, and satisfactory repeated recording performance can be obtained. Furthermore, the interface layer also has a function of promoting the crystallization of the recording layer.

Some preferred embodiments of the present invention will now be described, by way of example only, and with reference to the accompanying drawings, in which:
FIG. 1 is a partial cross-sectional view schematically showing an example of an optical information recording medium of the present invention;
FIG. 2 is a partial cross-sectional view schematically showing another example of the optical information recording medium of the present invention; and
FIG. 3 schematically shows an example of a recording/reproducing apparatus used for performing recording/reproducing in the optical information recording medium of the present invention.

Hereinafter, the present invention will be described by way of embodiments with reference to the drawings. The following embodiments are described merely for illustrative purpose, and the present invention is not limited to the following embodiments. Furthermore, in the following embodiments, like components are denoted with like reference numerals, and a repeated description may be omitted.

### Embodiment 1

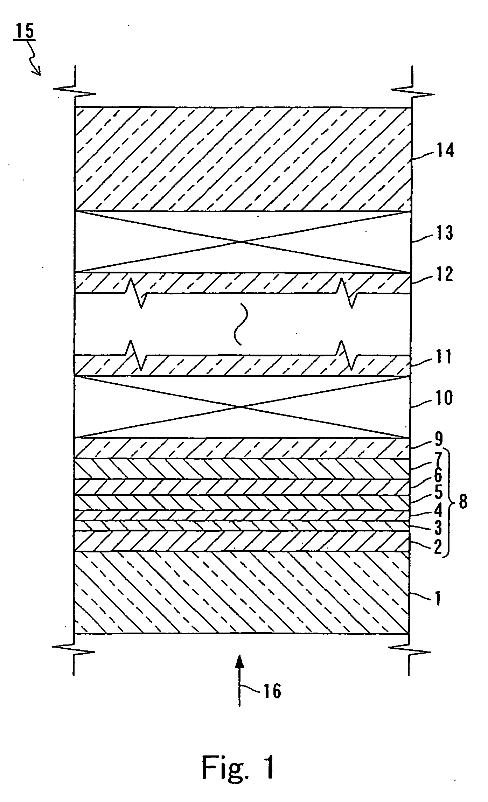

In Embodiment 1, an example of the optical information recording medium of the present invention will be described. FIG. 1 shows a partial cross-sectional view of an optical information recording medium 15 (hereinafter, which may be referred to as a recording medium 15) of Embodiment 1. The recording medium 15 has a plurality of information layers and is capable of recording and reproducing information by irradiation with a laser beam 16 from one side thereof.

The recording medium 15 includes a substrate 14, n (n is a natural number of 2 or more) information layers stacked on the substrate 14 via optical separation layers, and a transparent layer 1 formed in the uppermost portion. FIG. 1 shows the optical separation layers 9, 11 and 12, a first information layer 8, a second information layer 10 (hatching is omitted), and an n-th information layer 13 (hatching is omitted). The n-th information layer 13 is an n-th information layer from a light incident side of the laser beam 16. A (n-1)-th information layer from the first information layer 8 is of light transmittance type.

The optical separation layers 9, 11 and 12 and the transparent layer 1 are made of resin such as light-curable resin (in particular, UV-curable resin) and resin that acts slowly, a dielectric or the like. It is preferable that these materials have small light absorption with respect to the laser beam 16 to be used, and a small optical birefringence in a short wavelength range. As the transparent layer 1, a transparent disk-shaped thin plate may be used. This thin plate can be formed of resin such as polycarbonate, amorphous polyolefin, and PMMA, or glass. In this case, the transparent layer 1 can be attached to a lower side protection layer 2 of a first information layer 8 with resin such as light-curable resin (in particular, UV-curable resin) or resin that acts slowly.

In the recording medium 15, information can be recorded/reproduced with respect to all the information layers by irradiation with the laser beam 16 from one side. In a k-th information layer (k is a natural number satisfying 1 < k ≤ n), recording/reproducing is performed with the laser beam 16 transmitted through the first to (k-1)-th information layers.

Either of the first to n-th information layers may be set to be an information layer of a read-only memory (ROM) type or a write-once (WO) information layer in which only one writing is possible.

The spot diameter when the laser beam 16 is condensed is influenced by a wavelength λ. As the wavelength λ is shorter, the spot diameter can be decreased. Therefore, in the case of recording with high density, it is preferable that the wavelength λ of the laser beam 16 is 450 nm or less. On the other hand, in the case where the wavelength of the laser beam 16 is less than 350 nm, the light absorption by the optical separation layers and the transparent layer 1 is increased. Therefore, it is preferable that the wavelength of the laser beam 16 is in a range of 350 nm to 450 nm.

Hereinafter, the first information layer 8 closest to the incident side of the laser beam 16 among a plurality of information layers will be described in detail. The first information layer 8 includes a lower side protection layer 2, a lower side interface layer 3, a recording layer 4, an upper side protection layer 5, a reflection layer 6 and a transmittance adjusting layer 7 placed in this order from the incident side of the laser beam 16. Regarding the names of the interface layer and the protection layer, the lower side refers to the incident side of the laser beam 16 with respect to the recording layer, and the upper side refers to the opposite side of the incident side of the laser beam 16 with respect to the recording layer.

The substrate 14 is transparent and has a disk shape. The substrate 14 can be formed of, for example, resin such as polycarbonate, amorphous polyolefin and PMMA, or glass. As the material for the substrate 14, in particular, polycarbonate is preferable because of its excellent shape transfer and mass-productivity properties and low cost.

Guide grooves for guiding a laser beam, if required, may be formed on a surface of the substrate 14 on the n-th information layer 13 side. The surface of the substrate 14 on the side opposite to the n-th information layer 13 side preferably is smooth. It is preferable that the thickness of the substrate 14 is in a range of 400 µm to 1200 µm so that sufficient strength is obtained, and the thickness of the recording medium 15 is about 1200 µm. In the case where the thickness of the transparent layer 1 is about 600 µm where satisfactory recording/reproducing can be performed at NA = 0.6, it is preferable that the thickness of the substrate 14 is in a range of 550 µm to 650 µm. Furthermore, in the case where the thickness of the transparent layer 1 is about 100 µm where satisfactory recording/reproducing can be performed at NA= 0.85, it is preferable that the thickness of the substrate 14 is in a range of 1050 µm to 1150 µm.

The lower side protection layer 2 is made of a dielectric. The lower side protection layer 2 has functions of preventing the recording layer 4 from being oxidized, corroded, deformed and the like, adjusting an optical distance to enhance a light absorption efficiency of the recording layer 4, and increasing a change in an amount of reflected light before and after recording to enlarge a signal amplitude. For example, an oxide such as SiOₓ (x is 0.5 to 2.5), Al₂O₃, TiO₂, Ta₂O₅, ZrO₂, ZnO or Te-O can be used for the lower side protection layer 2. Furthermore, a nitride such as C-N, Si-N, Al-N, Ti-N, Ta-N, Zr-N, Ge-N, Cr-N, Ge-Si-N, Ge-Cr-N also can be used. Furthermore, a sulfide such as ZnS and a carbide such as SiC also can be used. Furthermore, a mixture of the above materials also can be used. ZnS-SiO₂ that is a mixture of ZnS and SiO₂ is an amorphous material that has a high refractive index and film-formation speed, and satisfactory mechanical characteristics and moisture resistance. Therefore, ZnS-SiO₂ particularly is excellent as the material for the lower side protection layer 2.

The thickness of the lower side protection layer 2 is determined so as to satisfy the condition under which an amount of reflected light changes greatly between the case where the recording layer 4 is in a crystal phase and the case where the recording layer 4 is in an amorphous phase, and the transmittance of the first information layer 8 becomes high. Specifically, the thickness of the lower side protection layer 2 can be determined by calculation based on a matrix method (e.g., see "Wave Optics", Hiroshi Kubota, Iwanami Shoten, 1971, Chapter 3).

The upper side protection layer 5 has functions of adjusting an optical distance to enhance a light absorption efficiency of the recording layer 4 and increasing a change in an amount of reflected light before and after recording to enlarge a signal amplitude. For example, an oxide such as TiO₂, ZrO₂, ZnO, Nb₂O₅, Ta₂O₅, SiO₂, Al₂O₃, Bi₂O₃ can be used for the upper side protection layer 5. Furthermore, a nitride such as C-N, Ti-N, Zr-N, Nb-N, Ta-N, Si-N, Ge-N, Cr-N, Al-N, Ge-Si-N, Ge-Cr-N also can be used. Furthermore, a sulfide such as ZnS, a carbide such as SiC or C (carbon) also can be used. Furthermore, a mixture of the above materials also can be used. By using a nitride for the upper side protection layer 5, the crystallization of the recording layer 4 can be promoted. Among the above materials, a material containing Ge-N is formed easily by a reactive sputtering method and has excellent mechanical characteristics and moisture resistance. Among them, in particular, a complex nitride such as Ge-Si-N and Ge-Cr-N is preferable. Furthermore, ZnS-SiO₂ that is a mixture of ZnS and SiO₂ is an amorphous material that has a high refractive index and film-formation speed, and satisfactory mechanical characteristics and moisture resistance. Therefore, ZnS-SiO₂ also is excellent as a material for the upper side protection layer 5.

A thickness d3 of the upper side protection layer 5, a refractive index n3 of the upper side protection layer 5 and a wavelength λ of the laser beam 16 preferably satisfy (1/64)λ/n3 ≤ d3 ≤ (15/64)λ/n3, and more preferably satisfy (1/64)λ/n3 ≤ d₃ ≤ (1/8)λ/n3. For example, in the case where the wavelength λ and n3 are selected in ranges of 350 nm ≤ λ ≤ 450 nm and 1.5 ≤ n3 ≤ 3.0, 2 nm ≤ d3 ≤ 70 nm is preferable, and 2 nm ≤ d3 ≤ 40 nm is more preferable. By selecting d3 in this range, the heat generated in the recording layer 4 can be diffused to the reflection layer 6 side effectively.

The transmittance adjusting layer 7 is made of a dielectric, and has a function of adjusting the transmittance of the first information layer 8. The transmittance adjusting layer 7 can increase both a transmittance Tc1 (%) of the first information layer 8 when the recording layer 4 is in a crystal phase and a transmittance Ta1 (%) of the first information layer 8 when the recording layer 4 is in an amorphous phase. More specifically, in the first information layer 8 including the transmittance adjusting layer 7, the transmittance is increased by 2% to 10% compared with the case where the transmittance adjusting layer 7 is not present. Furthermore, the transmittance adjusting layer 7 also has a function of effectively diffusing heat generated in the recording layer 4.

A refractive index n1 and an extinction coefficient k1 of the transmittance adjusting layer 7 satisfy preferably 2.4 ≤ n1 and k1 ≤ 0.1, more preferably 2.4 ≤ n1 ≤ 3.0 and k1 ≤ 0.05, so as to enhance the function of increasing the transmittances Tc1 and Ta1 of the first information layer 8.

A thickness d1 and the refractive index n1 of the transmittance adjusting layer 7 and the wavelength λ of the laser beam 16 satisfy preferably (1/32)λ/n1 ≤ d1 ≤ (3/16)λ/n1 or (17/32)λ/n1 ≤ d1 ≤ (11/16)λ/n1, more preferably (1/16)λ/n1 ≤ d1 ≤ (5/32)λ/n1 or (9/16)λ/n1 ≤ d1 ≤ (21/32)λ/n1. For example, the wavelength λ and n1 are selected in ranges of 350 nm ≤ λ ≤ 450 nm and 2.4 ≤ n1 ≤ 3.0, 3 nm ≤ d1 ≤ 35 nm or 60 nm ≤ d1 ≤ 130 nm is preferable, and 5 nm ≤ d1 ≤ 30 nm or 80 nm ≤ d1 ≤ 100 nm is more preferable. By selecting d1 in this range, both the transmittances Tc1 and Ta1 of the first information layer 8 can be increased.

For example, an oxide such as TiO₂, ZrO₂, ZnO, Nb₂O₅, Ta₂O₅, SiO₂, Al₂O₃, Bi₂O₃ can be used for the transmittance adjusting layer 7. Furthermore, a nitride such as Ti-N, Zr-N, Nb-N, Ta-N, Si-N, Ge-N, Cr-N, Al-N, Ge-Si-N, Ge-Cr-N also can be used. Furthermore, a sulfide such as ZnS also can be used. Furthermore, a mixture of the above materials also can be used. Among them, in particular, TiO₂ or a material containing TiO₂ preferably is used. These materials have a large refractive index (n1 = 2.5 to 2.8) in the vicinity of a wavelength of 400 nm and a small extinction coefficient (k1= 0.0 to 0.05). Therefore, the function of increasing the transmittance of the first information layer 8 is enhanced. In the case where the transmittance adjusting layer 7 is formed of a material mainly containing TriO₂, the content of TiO₂ preferably is 50 mol% or more.

The lower side interface layer 3 has a function of preventing the movement of a substance between the lower side protection layer 2 and the recording layer 4 caused by repeated recording. For example, a nitride such as C-N, Ti-N, Zr-N, Nb-N, Ta-N, Si-N, Ge-N, Cr-N, Al-N, Ge-Si-N, Ge-Cr-N; an oxide such as CrO₂; or an oxide nitride including these materials can be used. Furthermore, C (carbon) also can be used. Among them, a material containing Ge-N can form an interface layer that is formed easily by reactive sputtering and is excellent in mechanical characteristics and moisture resistance. In particular, a complex nitride such as Ge-Si-N and Ge-Cr-N is preferable. When the interface layer is thick, the reflectance and absorptivity of the first information layer 8 are changed greatly and influence the recording/erasing performance. Thus, the thickness of the interface layer desirably in a range of 1 nm to 10 nm, and more preferably in a range of 2 nm to 5 nm.

The recording medium 15 may have an upper side interface layer placed on an interface between the recording layer 4 and the upper side protection layer 5. In this case, the materials described regarding the lower side interface layer 3 can be used for the upper side interface layer. Furthermore, for the same reason as that of the lower side interface layer 3, the thickness of the upper side interface layer preferably is in a range of 1 nm to 10 nm (more preferably 2 nm to 5 nm).

An interface layer may be placed between the upper side protection layer 5 and the reflection layer 6.

These interface layers particularly prevent the movement of a substance between the upper side protection layer 5 and the reflection layer 6 in an environment of high temperature and high humidity and during recording. The materials described regarding the lower side interface layer 3 can be used for these interface layers. Furthermore, for the same reason as that of the lower side interface layer 3, the thicknesses of these interface layers preferably are in a range of 1 nm to 10 nm (more preferably 2 nm to 5 nm).

The recording layer 4 is made of a material that is reversibly changed between a crystal phase and an amorphous phase by irradiation with the laser beam 16. The recording layer 4 can be made of a material containing, for example, Ge, Sb and Te. More specifically, the recording layer 4 can be made of a material represented by a composition formula: GeₐSb_{b}Te₃₊ₐ. This material satisfies preferably 0 < a ≤ 25 (more preferably 4 s a s 23) so that a stable amorphous phase is obtained to enlarge a signal amplitude, and an increase in a melting point and a decrease in a crystallization speed are suppressed. Furthermore, this material satisfies preferably 1.5 ≤ b ≤4 (more preferably 1.5 ≤ b ≤ 3) so that a stable amorphous phase is obtained to enlarge a signal amplitude, and a decrease in a crystallization speed is suppressed.

Furthermore, the recording layer 4 may be made of a material represented by a composition formula: (Ge-M1)ₐSb_{b}Te₃₊ₐ (where M1 is at least one element selected from the group consisting of Sn and Pb). This composition formula means that Ge and an element M1 are contained in an amount of 100 a/(3+2a+b) atomic % in total. The composition of this material is obtained by substituting the element M1 for a part of Ge of the material represented by a composition formula GeₐSb_{b}Te₃₊ₐ. In the case of using this material, the element M1 substituting for Ge enhances a crystallization ability, so that a sufficient erasure ratio is obtained even in the case where the recording layer 4 is very thin. As the element M1, Sn is more preferable since it has no toxicity. This material also satisfies preferably 0 < a s 25 (more preferably 4 ≤ a ≤ 23) and 1.5 ≤ b ≤ 4 (more preferably, 1.5 ≤ b ≤ 3).

Furthermore, the recording layer 4 may be made of a material represented by a composition formula: (GeₐSb_{b}Te₃₊ₐ)_{100-c}M2_{c} (where M2 is at least one element selected from the group consisting of Si, Ti, V, Cr, Mn, Fe, Co, Ni, Cu, Se, Zr, Nb, Mo, Ru, Rh, Pd, Ag, In, Sn, Ta, W, Os, Ir, Pt, Au and Bi). The composition of this material is obtained by adding an element M2 to the material represented by a composition formula: GeₐSb_{b}Te₃₊ₐ. In this case, the added element M2 raises the melting point and the crystallization temperature of the recording layer, so that the thermal stability of the recording layer can be enhanced. This material satisfies preferably 0 < c ≤ 20, more preferably 2 ≤ c ≤ 10 so as to suppress the decrease in a crystallization speed. Furthermore, this material satisfies preferably 0 < a ≤ 25 (more preferably 4 ≤ a ≤ 23) and preferably 1.5 ≤ b ≤ 4 (more preferably 1.5 ≤ b ≤ 3).

Furthermore, the recording layer 4 may be made of a material represented by a composition formula: (SbₓTe₁₀₀₋ₓ)_{100-y}M3_{y} (where M3 is at least one element selected from the group consisting of Ag, In, Ge, Sn, Se, Bi, Au and Mn). This material is obtained by adding an element M3 to a Sb-Te alloy in the vicinity of a Sb₇₀Te₃₀ eutectic composition. In the case where x and y satisfy 50 ≤ x ≤ 95 and 0 < y ≤ 20, even when the recording layer 4 is very thin, the reflectance difference (Rc1 - Ra1) of the first information layer 8 can be increased, whereby satisfactory recording/reproducing characteristics are obtained.

In the case of 65 ≤ x, a particularly high crystallization speed and a particularly satisfactory erasure ratio are obtained. Furthermore, in the case of 85 ≤ x, it becomes difficult to make the recording layer amorphous. Therefore, it is more preferable to satisfy 65 ≤ x ≤ 85. Furthermore, in order to obtain satisfactory recording/reproducing characteristics, it is preferable to add an element M3 so as to adjust a crystallization speed. It is more preferable that y satisfies 1 ≤ y ≤ 10. In the case of y ≤ 10, a plurality of phases are suppressed from being generated, so that the degradation of characteristics caused by repeated recording can be suppressed.

In order to allow the amount of laser light required for recording/reproducing to reach the information layers other than the first information layer 8, it is required to make the thickness of the recording layer 4 as thin as possible so as to increase the transmittance of the first information layer 8. For example, in the case where the recording layer 4 is made of a material represented by a composition formula: GeₐSb_{b}Te₃₊ₐ, (Ge-M1)ₐSb_{b}Te₃₊ₐ or a material represented by a composition formula: (GeₐSb_{b}Te₃₊ₐ)_{100-c}M2_{c}, the thickness of the recording layer 4 is in a range of preferably 3 nm to 9 nm (more preferably 4 nm to 8 nm). Similarly, in the case where the recording layer 4 is made of a material represented by a composition formula: (SbₓTe₁₀₀₋ₓ)_{100-y}M3_{y}, the thickness of the recording layer 4 is in a range of preferably 1 nm to 7 nm (more preferably 2 nm to 6 nm).

The reflection layer 6 has an optical function of increasing the amount of light absorbed by the recording layer 4. Furthermore, the reflection layer 6 also has a thermal function of rapidly diffusing heat generated in the recording layer 4, thereby enabling the recording layer 4 to be made amorphous easily. Furthermore, the reflection layer 6 also has a function of protecting a multi-layer film from an environment for use.

As the material for the reflection layer 6, for example, elemental metal having a high heat conductivity such as Ag, Au, Cu or Al can be used. Furthermore, an alloy can be used, which contains one or a plurality of these metal elements as main components, with one or a plurality of other elements added thereto so as to enhance moisture resistance, adjust a heat conductivity or the like. Specifically, an alloy such as Al-Cr, Al-Ti, Au-Pd, Au-Cr, Ag-Pd, Ag-Pd-Cu, Ag-Pd-Ti, Ag-Ru-Au or Cu-Si can be used. These alloys are excellent materials having outstanding corrosion resistance and satisfying the condition of rapid cooling. In particular, an Ag alloy is preferable as the material for the reflection layer 6 since it has a large heat conductivity and a high light transmittance.

A refractive index n2 and an extinction coefficient k2 of the reflection layer 6 satisfy preferably n2 ≤ 2.0 and 1.0 ≤ k2, more preferably 0.1 ≤ n2 ≤ 1.0 and 1.5 ≤ k2 ≤ 4.0 so as to further increase the transmittance of the first information layer 8.

In order to make the transmittances Tc1 and Ta1 of the first information layer 8 as high as possible, the thickness of the reflection layer 6 is in a range of preferably 3 nm to 15 nm, more preferably 8 nm to 12 nm. In the case where the thickness of the reflection layer 6 is smaller than 3 nm, its heat diffusion function becomes insufficient, and the reflectance of the first information layer 8 is decreased by 2 to 3%. Furthermore, in the case where the reflection layer 6 is thicker than 15 nm, the transmittance of the first information layer 8 becomes insufficient.

The refractive index n1 and the extinction coefficient k1 of the transmittance adjusting layer 7, and the refractive index n2 and the extinction coefficient k2 of the reflection layer 6 satisfy preferably 1.5 ≤ (n1 - n2) ≤ 3.0 and 1.5 ≤ (k2 - k1) ≤ 4.0, more preferably 2.0 ≤ (n1 - n2) s 3.0 and 1.5 ≤ (k2 - k1) ≤ 3.0. In the case where this relationship is satisfied, light is confined in the transmittance adjusting layer 7 having a refractive index larger and an extinction coefficient smaller than those of the reflection layer 6, and an interference effect of light is increased, whereby the transmittance of the first information layer 8 can be increased. For example, in the case of using the transmittance adjusting layer 7 made of TiO₂ and the reflection layer 6 made of an Ag alloy, n1 = 2.7, k1 = 0.0, n2 = 0.2 and k2 = 2.0 at a wavelength of 405 nm. In this case, (n1 - n2) = 2.5 and (k2 - k1) = 2.0. Thus, the above relationship is satisfied.

The optical separation layers 9, 11 and 12 discriminate focus positions of the first information layer 8, the second information layer 10 and the n-th information layer 13, respectively. It is required that the thickness of the optical separation layers 9, 11 and 12 is equal to or more than a depth of focus ΔZ determined by the numerical aperture NA of an objective lens and the wavelength λ of the laser beam 16. Assuming that the standard strength of a condensed point is 80% of that in the absence of aberration, ΔZ can be approximated by ΔZ = λ/{2(NA)2}. When λ = 400 nm and NA = 0.6, ΔZ = 0.556 µm. This is within ±0.6 µm, which is within the depth of focus. Therefore, in this case, it is required that the thickness of the optical separation layers 9, 11 and 12 is 1.2 µm or more. It is desirable that the distance between the first information layer 8 and the n-th information layer 13 is set in a range in which the laser beam 16 can be condensed with an objective lens. Therefore, it is preferable that the total thickness of all the optical separation layers is set within a common difference (e.g., 50 µm or less) allowable by the objective lens.

On surfaces on an incident side of the laser beam 16 among those of the optical separation layers 9, 11 and 12, guide grooves for guiding a laser beam if required may be formed.

In order to allow the amount of laser light required for recording/reproducing to reach the information layers other than the first information layer 8, the transmittances Tc1 and Ta1 of the first information layer 8 satisfy preferably 46 < Tc1 and 46 < Ta1, more preferably 48 ≤ Tc1 and 48 ≤ Ta1.

The transmittances Tc1 and Ta1 of the first information layer 8 satisfy preferably -5 ≤ (Tc1 - Ta1) ≤ 5, more preferably -3 ≤ (Tc1- Ta1) ≤ 3. If the transmittances Tc1 and Ta1 satisfy this condition, the influence of a change in a transmittance of the first information layer 8 in accordance with the state of the recording layer 4 is small during recording/reproducing in the information layers other than the first information layer 8, and satisfactory recording/reproducing characteristics are obtained.

It is preferable that the reflectances Rc1 and Ra1 of the first information layer 8 satisfy Ra1 < Rc1. According to this configuration, the reflectance in an initial state (crystal phase) in which information is not recorded is high, so that a recording/reproducing operation can be performed stably. Furthermore, Rc1 and Ra1 satisfy preferably 0.1 ≤ Ra1 ≤ 5 or 4 ≤ Rc1 ≤ 15, more preferably 0.5 s Ra1 ≤ 3 or 4 ≤ Rc1 ≤ 10 so as to increase the reflectance difference (Rc1 - Ra1) to obtain satisfactory recording/reproducing characteristics.

The recording medium 15 of Embodiment 1 can be produced by a method described in Embodiment 3.

### Embodiment 2

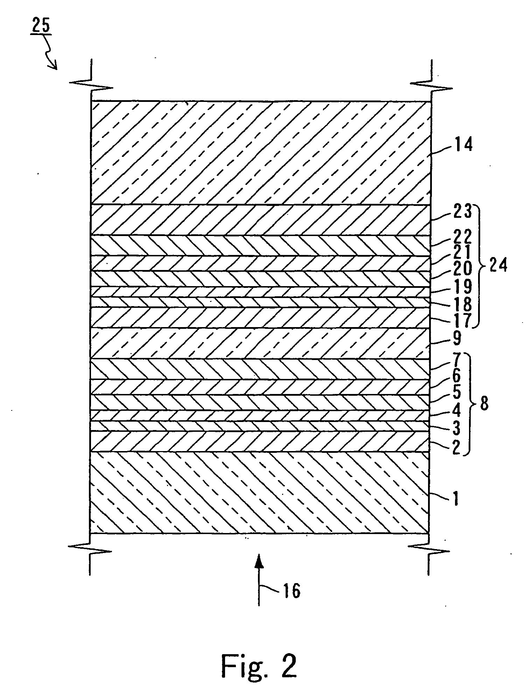

In Embodiment 2, an example of an optical information recording medium of n = 2, i.e., having two information layers will be described among those of the present invention described in Embodiment 1. FIG. 2 shows a partial cross-sectional view of a recording medium 25 of Embodiment 2. The optical information recording medium 25 (hereinafter, which may be referred to as a recording medium 25) is capable of recording/reproducing information by irradiation with a laser beam 16 one side thereof.

The recording medium 25 includes a substrate 14, and a second information layer 24, an optical separation layer 9, a first information layer 8 and a transparent layer 1 stacked successively on the substrate 14. The materials described in Embodiment 1 can be used for the substrate 14, the optical separation layer 9, the first information layer 8 and the transparent layer 1. The shapes and functions of these materials are the same as those described in Embodiment 1.

Hereinafter, the configuration of the second information layer 24 will be described in detail. The second information layer 24 includes a second lower side protection layer 17, a second lower side interface layer 18, a second recording layer 19, a second upper side interface layer 20, a second upper side protection layer 21, a second metal layer 22 and a second reflection layer 24 placed in this order from an incident side of the laser beam 16. In the second information layer 24, recording/reproducing is performed with the laser beam 16 transmitted through the transparent layer 1, the first information layer 8 and the optical separation layer 9.

The second lower side protection layer 17 is made of a dielectric in the same way as in the lower side protection layer 2. The second lower side protection layer 17 has functions of preventing the second recording layer 19 from being oxidized, corroded, deformed and the like, adjusting an optical distance to enhance a light absorption efficiency of the second recording layer 19, and increasing a change in an amount of reflected light before and after recording to enlarge a signal amplitude. In the same way as in the lower side protection layer 2, for example, an oxide such as SiOₓ (x is 0.5 to 2.5), TiO₂, Ta₂O₅, ZrO₂, ZnO or Te-O can be used for the lower side protection layer 17. Furthermore, a nitride such as C-N, Si-N, Al-N, Ti-N, Ta-N, Zr-N, Ge-N, Cr-N, Ge-Si-N, Ge-Cr-N or the like also can be used. Furthermore, a sulfide such as ZnS and a carbide such as SiC also can be used. Furthermore, a mixture of the above materials also can be used. In the same way as in the lower side protection layer 2, ZnS-SiO₂ particularly is excellent as the material for the second lower side protection layer 17.

The thickness of the second lower side protection layer 17 can be determined precisely so as to satisfy the condition under which an amount of reflected light is changed greatly between the case where the second recording layer 19 is in a crystal phase and the case where the second recording layer 19 is in an amorphous phase, in the same way as in the lower side protection layer 2. This thickness can be determined, for example, by calculation based on a matrix method.

The second upper side protection layer 21 has functions of adjusting an optical distance to enhance a light absorption efficiency of the second recording layer 19 and increasing a change in an amount of reflected light before and after recording to enlarge a signal amplitude, in the same way as in the upper side protection layer 5. In the same way as in the upper side protection layer 5, for example, an oxide such as TiO₂, ZrO₂, ZnO, Nb₂O₅, Ta₂O₅, SiO₂, Al₂O₃, Bi₂O₃ can be used for the second upper side protection layer 21. Furthermore, a nitride such as C-N, Ti-N, Zr-N, Nb-N, Ta-N, Si-N, Ge-N, Cr-N, Al-N, Ge-Si-N, Ge-Cr-N also can be used. Furthermore, a sulfide such as ZnS, a carbide such as SiC and C also can be used. Furthermore, a mixture of the above materials also can be used. When a nitride is used for the second upper side protection layer 21, the effect of promoting the crystallization of the second recording layer 19 is obtained. Among the above materials, a material containing Ge-N is excellent. In particular, a complex nitride such as Ge-Si-N and Ge-Cr-N is preferable. Furthermore, ZnS-SiO₂ also is excellent as a material for the upper side protection layer 5, in the same way as in the upper side protection layer 5.

The second lower side interface layer 18 has a function of preventing the movement of a substance between the second lower side protection layer 17 and the second recording layer 19 caused by repeated recording. In the same way as in the lower side interface layer 3, for example, a nitride such as C-N, Ti-N, Zr-N, Nb-N, Ta-N, Si-N, Ge-N, Cr-N, Al-N, Ge-Si-N, Ge-Cr-N; or an oxide nitride including these materials can be used. Furthermore, C (carbon) also can be used. Among them, a material containing Ge-N is an excellent material for the interface layer. In particular, a complex nitride such as Ge-Si-N and Ge-Cr-N is preferable. When the interface layer is thick, the reflectance and absorptivity of the second information layer 24 are changed greatly and influence the recording/erasing performance. Thus, the thickness of the interface layer desirably is in a range of 1 nm to 10 nm, and more preferably in a range of 2 nm to 5 nm.

The recording medium 25 may have a second upper side interface layer 20 placed on an interface between the second recording layer 19 and the second upper side protection layer 21, as shown in FIG. 2. The second upper side interface layer 20 can be made of the material described regarding the second lower side interface layer 18. The thickness thereof is in a range of preferably 1 nm to 10 nm (more preferably 2 nm to 5 nm) for the same reason as that of the second lower side interface layer 18.

The second recording layer 19 is made of a material that is reversibly changed between a crystal phase and an amorphous phase by irradiation with the laser beam 16, in the same way as in the recording layer 4. The second recording layer 19 can be made of the material described regarding the recording layer 4. The recording layer 4 and the second recording layer 19 may be made of the same material or different materials. The second recording layer 19 can be made of, for example, a material containing three elements of Ge, Sb and Te. Specifically, the second recording layer 19 can be made of a material represented by GeₐSb_{b}Te₃₊ₐ, in the same way as in the recording layer 4. This material satisfies preferably 0 < a ≤ 25 (more preferably 4 ≤ a ≤ 23) so that a stable amorphous phase is obtained to enlarge a signal amplitude, and an increase in a melting point and a decrease in a crystallization speed are suppressed. Furthermore, this material satisfies preferably 1.5 ≤ b ≤ 4 (more preferably 1.5 ≤ b ≤ 3) so that a stable amorphous phase is obtained to enlarge a signal amplitude, and a decrease in a crystallization speed is suppressed.

Furthermore, the second recording layer 19 may be made of a material represented by a composition formula: (Ge-M1)ₐSb_{b}Te₃₊ₐ (where M1 is at least one element selected from the group consisting of Sn and Pb), in the same way as in the recording layer 4. In the case of using this material, the element M1 substituting for Ge enhances a crystallization ability, so that a sufficient erasure ratio is obtained even in the case where the second recording layer 19 is very thin. As the element M1, Sn is more preferable since it has no toxicity. This material also satisfies preferably 0 < a ≤ 25 (more preferably 4 ≤ a ≤ 23) and 1.5 ≤ b ≤ 4 (more preferably, 1.5 ≤ b ≤ 3).

Furthermore, the second recording layer 19 may be made of a material represented by a composition formula: (GeₐSb_{b}Te₃₊ₐ)_{100-c}M2_{c} (where M2 is at least one element selected from the group consisting of Si, Ti, V, Cr, Mn, Fe, Co, Ni, Cu, Se, Zr, Nb, Mo, Ru, Rh, Pd, Ag, In, Sn, Ta, W, Os, Ir, Pt, Au and Bi), in the same way as in the recording layer 4. In this case, the added element M2 raises the melting point and the crystallization temperature of the recording layer, so that the thermal stability of the recording layer can be enhanced. This material satisfies preferably 0 < c ≤ 20, more preferably 2 ≤ c ≤ 10. Furthermore, this material satisfies preferably 0 < a ≤ 25 (more preferably 4 ≤ a ≤ 23) and preferably 1.5 ≤ b ≤ 4 (more preferably 1.5 ≤ b ≤ 3).

Furthermore, the second recording layer 19 may be made of a material represented by a composition formula: (SbₓTe₁₀₀₋ₓ)_{100-y}M3_{y} (where M3 is at least one element selected from the group consisting of Ag, In, Ge, Sn, Se, Bi, Au and Mn). In the case where x and y satisfy 50 ≤ x ≤ 95 and 0 < y ≤ 20, the reflectance difference of the second information layer 24 between the case where the second recording layer is in a crystal phase and the case where the second recording layer 19 is in an amorphous phase can be increased, whereby satisfactory recording/reproducing characteristics are obtained. In the case of 65 ≤ x, a particularly high crystallization speed and a particularly satisfactory erasure ratio are obtained. Furthermore, in the case of 85 ≤ x, it becomes difficult to make the recording layer amorphous. Therefore, it is more preferable to satisfy 65 ≤ x ≤ 85. Furthermore, in order to obtain satisfactory recording/reproducing performance, it is preferable to add an element M3 so as to adjust a crystallization speed. It is more preferable that y satisfies 1 ≤ y ≤ 10. In the case of y ≤ 10, a plurality of phases are suppressed from being generated, so that the degradation of characteristics caused by repeated recording can be suppressed.

The thickness of the second recording layer 19 is preferably in a range of 6 nm to 20 nm so as to enhance the recording sensitivity of the second information layer 24. Even in this range, in the case where the second recording layer 19 is thick, a thermal effect on an adjacent region due to the diffusion of heat in an in-plane direction becomes large. Furthermore, in the case where the second recording layer 19 is thin, the reflectance of the second information layer 24 becomes small. Therefore, it is more preferable that the thickness of the second recording layer 19 is in a range of 9 nm to 15 nm.

The second reflection layer 23 has the same function as that of the reflection layer 6. The second reflection layer 23 has an optical function of increasing the amount of light to be absorbed by the second recording layer 19. Furthermore, the second reflection layer 23 also has a thermal function of rapidly diffusing heat generated in the second recording layer 19, thereby enabling the second recording layer 19 to be made amorphous easily. Furthermore, the second reflection layer 23 also has a function of protecting a multi-layer film from an environment for use.

As the material for the second reflection layer 23, for example, elemental metal having a high heat conductivity such as Ag, Au, Cu or Al can be used, in the same way as in the reflection layer 6. Specifically, an alloy such as Al-Cr, Al-Ti, Au-Pd, Au-Cr, Ag-Pd, Ag-Pd-Cu, Ag-Pd-Ti, Ag-Ru-Au or Cu-Si can be used. In particular, an Ag alloy is preferable as the material for the second reflection layer 23 since it has a large heat conductivity. The second information layer 24 is not required to have a high transmittance. Therefore, the thickness of the second reflection layer 23 preferably is 30 nm or more where a sufficient heat diffusion function is obtained. Even in this range, in the case where the second reflection layer 23 is thicker than 200 nm, its heat diffusion function becomes too large, and the recording sensitivity of the second information layer 24 is decreased. Thus, the thickness of the second reflection layer 23 preferably is in a range of 30 nm to 200 nm.

The recording medium 25 may have a second metal layer 22 placed on an interface between the second upper side protection layer 21 and the second reflection layer 23, as shown in FIG. 2. In this case, a material having a heat conductivity lower than that of the second reflection layer 23 may be used for the second metal layer 22. For example, in the case where an Ag alloy is used for the second reflection layer 23, it is preferable to use an Al alloy for the second metal layer 22. The thickness of the second metal layer 22 is in a range of preferably 3 nm to 100 nm (more preferably 10 nm to 50 nm).

The recording medium 25 of Embodiment 2 can be produced by the method described in Embodiment 4.

### Embodiment 3

In Embodiment 3, a method for producing the recording medium 15 of the present invention will be described. First, (n-1) information layers are stacked successively on a substrate 14 (thickness: 1100 µm, for example) via an optical separation layer. The information layer is made of a single-layer film or a multi-layer film, and each layer can be formed by successively sputtering a base material to be a material in a film-formation apparatus. Furthermore, the optical separation layer can be formed by coating the information layer with a light-curable resin (in particular, UV-curable resin) or resin that acts slowly, rotating the substrate 14 so as to spread the resin uniformly (spin coating), and curing the resin. In the case where the optical separation layer includes guide grooves for a laser beam 16, after the information layer is coated with resin, a substrate (die) provided with grooves is brought into contact with uncured resin. Then, the substrate 14 and the adhering dye are rotated together to spread resin uniformly, and thereafter, the resin is cured. Thereafter, the substrate (die) is peeled, whereby an optical separation layer with guide grooves formed thereon can be formed.

Thus, (n-1) information layers are stacked on the substrate 14 via the optical separation layer, and an optical separation layer 9 further is formed. Then, a first information layer 8 is formed on the optical separation layer 9. Specifically, first, the substrate 14 with the optical separation layer 9 formed thereon is placed in a film-formation apparatus, whereby a transmittance adjusting layer 7 is formed on the optical separation layer 9. The transmittance adjusting layer 7 can be formed by reactive sputtering of a base material made of metal constituting the transmittance adjusting layer 7 in a mixed gas atmosphere of Ar gas and reactive gas. The transmittance adjusting layer 7 also can be formed by sputtering a base material made of a compound in an Ar gas atmosphere or a mixed gas atmosphere of Ar gas and reactive gas (at least one gas selected from the group consisting of oxygen gas and nitrogen gas).

Then, a reflection layer 6 is formed on the transmittance adjusting layer 7. The reflection layer 6 can be formed by sputtering a base material made of metal or an alloy constituting the reflection layer 6 in an Ar gas atmosphere or a mixed gas atmosphere of Ar gas and reactive gas.

Then, an upper side protection layer 5 is formed on the reflection layer 6. The upper side protection layer 5 can be formed by reactive sputtering of a base material made of metal constituting the upper side protection layer 5 in a mixed gas atmosphere of Ar gas and reactive gas. The upper side protection layer 5 also can be formed by sputtering a base material made of a compound in an Ar gas atmosphere or a mixed gas atmosphere of Ar gas and reactive gas.

Then, a recording layer 4 is formed on the upper side protection layer 5. The recording layer 4 can be formed by sputtering a base material made of a Ge-Sb-Te alloy, a base material made of a Ge-Sb-Te-M1 alloy, a Ge-Sb-Te-M2 alloy or a base material made of a Sb-Te-M3 alloy, using one power source, in accordance with the composition of the recording layer 4.

As the atmosphere gas for sputtering (sputtering gas), Ar gas, Kr gas, mixed gas ofAr gas and reactive gas (at least one gas selected from the group consisting of oxygen gas and nitrogen gas) or mixed gas of Kr gas and reactive gas can be used. The recording layer 4 also can be formed by simultaneously sputtering each base material of Ge, Sb, Te, M1, M2 or M3, using a plurality of power sources. The recording layer 19 also can be formed by simultaneously sputtering a binary base material, a ternary base material, or the like including a combination of either of Ge, Sb, Te, M1, M2 or M3, using a plurality of power sources. In these cases, the recording layer 19 is formed by sputtering in an Ar gas atmosphere, a Kr gas atmosphere, a mixed gas atmosphere of Ar gas and reactive gas or mixed gas atmosphere of Kr gas and reactive gas.

As described in Embodiment 1, the thickness of the recording layer 4 is in a range of preferably 1 nm to 9 nm, more preferably 4 nm to 8 nm. The film-formation rate of the recording layer 4 can be controlled by the power of a power source. In the case where the film-formation rate is lowered too much, a film-formation time is prolonged, and gas in an atmosphere is mixed in the recording layer in a required amount or more. In the case where the film-formation rate is raised too much, a film-formation time can be shortened; however, it becomes difficult to control the layer thickness exactly. Therefore, the film-formation rate of the recording layer 4 preferably is in a range of 0.1 nm/sec. to 3 nm/sec.

Then, a lower side interface layer 3 is formed, if required, on the recording layer 4. The lower side interface layer 3 can be formed by reactive sputtering of a base material made of metal constituting the lower side interface layer 3 in a mixed gas atmosphere of Ar gas and reactive gas. The lower side interface layer 3 also can be formed by sputtering a base material made of a compound in an Ar gas atmosphere or a mixed gas atmosphere of Ar gas and reactive gas.

Then, a lower side protection layer 2 is formed on the recording layer 4 or the lower side interface layer 3. The lower side protection layer 2 can be formed by the same method as that of the upper side protection layer 5 (this also applies to the following protection layer). The composition of a base material used for forming these protection layers is selected in accordance with the composition of the protection layers and sputtering gas (this also applies to the processes of forming the other layers). More specifically, these protection layers may be formed using base materials having the same composition or may be formed using base materials having different compositions (this also applies to the processes of forming the other layers).

An interface layer may be formed between the upper protection layer 5 and the reflection layer 6, and between the reflection layer 6 and the transmittance adjusting layer 7. The interface layer in this case can be formed by the same method as that for the lower side interface layer 3 (this also applies to the following interface layer).

Finally, a transparent layer 1 is formed on the lower side protection layer 2. The transparent layer 1 can be formed by coating the lower side protection layer 2 with light-curable resin (in particular, UV-curable resin) or resin that acts slowly, followed by spin coating, and curing the resin. The transparent layer 1 may be made of a transparent disk-shaped thin plate. The thin plate can be made of, for example, resin such as polycarbonate, amorphous polyolefin and PMMA, or glass. In this case, the transparent layer 1 can be formed by coating the lower side protection layer 2 with light-curable resin (in particular, UV-curable resin) and resin that acts slowly, bringing the substrate into contact with the lower side protection layer 2 to perform spin coating, and coating the resin.

After the lower side protection layer 2 is formed or the transparent layer 1 is formed, if required, an initialization process of crystallizing the entire surface of the recording layer 4 may be performed. The recording layer 4 can be crystallized by irradiation with a laser beam. The recording medium 15 can be produced as described above.

### Embodiment 4

In Embodiment 4, a method for producing the recording medium 25 of the present invention will be described. According to the production method of Embodiment 4, first, a second information layer 24 is formed. Specifically, first, the substrate 14 (thickness: 1100 µm, for example) is prepared and placed in a film-formation apparatus.

Then, a second reflection layer 23 is formed on the substrate 14. In the case where the substrate 14 is provided with guide grooves for guiding a laser beam 16, the second reflection layer 23 is formed on the side where the guide grooves are formed. The second reflection layer 23 can be formed by the same method as that of the reflection layer 6.

Then, a second metal layer 22 is formed, if required, on the second reflection layer 23. The second metal layer 22 can be formed by the same method as that of the reflection layer 6. Then, a second upper side protection layer 21 is formed on the second reflection layer 23 or the second metal layer 22.

Then, a second upper side interface layer 20 is formed, if required, on the second upper side protection layer 21. Then, a second recording layer 19 is formed on the second upper side protection layer 21 or the second upper side interface layer 20. The second recording layer 19 can be formed by the same method as that of the recording layer 4.

The film-formation rate of the second recording layer 19 preferably is in a range of 0.3 nm/sec. to 10 nm/sec. As described in Embodiment 2, the thickness of the second recording layer 19 is in a range of preferably 6 nm to 15 nm, more preferably 8 nm to 12 nm. The film-formation rate of the second recording layer 19 can be controlled by the power of a power source. In the case where the film-formation rate is lowered too much, a film-formation time is prolonged, and gas in an atmosphere is mixed in the recording layer in a required amount or more. In the case where the film-formation rate is raised too much, a film-formation time can be shortened; however, it becomes difficult to control the layer thickness exactly. Therefore, the film-formation rate of the second recording layer 19 preferably is in a range of 0.3 nm/sec. to 10 nm/sec.

Then, a second lower side interface layer 18 is formed, if required, on the second recording layer 19. Then, a second lower side protection layer 17 is formed on the second recording layer 19 or the second lower side interface layer 18.

Thus, the second information layer 24 is formed. Then, an optical separation layer 9 is formed on the second lower side protection layer 17 of the second information layer 24. The optical separation layer 9 can be formed by the method described in Embodiment 3.

After the second lower side protection layer 17 is formed or the optical separation layer 9 is formed, if required, an initialization process of crystallizing the entire surface of the second recording layer 19 may be performed. The second recording layer 19 can be crystallized by irradiation with a laser beam.

Then, a first information layer 8 is formed on the optical separation layer 9. Specifically, first, a transmittance adjusting layer 7, a reflection layer 6, an upper side protection layer 5, a recording layer 4, a lower side interface layer 3 and a lower side protection layer 2 are formed in this order on the optical separation layer 9. An interface layer may be placed between the upper side protection layer 5 and the reflection layer 6 and between the reflection layer 6 and the transmittance adjusting layer 7. Each layer can be formed by the method described in Embodiment 3.

Finally, a transparent layer 1 is formed on the lower side protection layer 2. The transparent layer 1 can be formed by the method described in Embodiment 3.

After the lower side protection layer 2 is formed or the transparent layer 1 is formed, if required, an initialization process of crystallizing the entire surface of the recording layer 4 may be performed. The recording layer 4 can be crystallized by irradiation with a laser beam. The recording medium 25 can be produced as described above.

### Embodiment 5

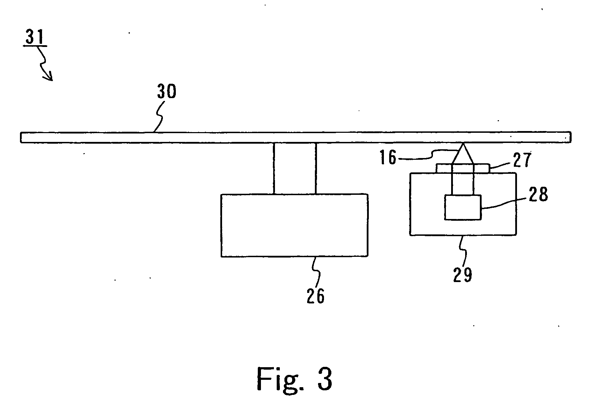

In Embodiment 5, a method for recording/reproducing information with respect to the optical information recording media of the present invention described in Embodiments 1 and 2 will be described. FIG. 3 schematically shows a partial configuration of a recording/reproducing apparatus 31 used for the recording/reproducing method of the present invention. Referring to FIG. 3, the recording/reproducing apparatus 31 includes a spindle motor 26 for rotating an optical information recording medium 30, an optical head 29 provided with a semiconductor laser 28, and an objective lens 27 for condensing a laser beam 16 output from the semiconductor laser 28.

The optical information recording medium 30 is a medium as described in Embodiment 1 or 2, and includes a plurality of information layers (for example, the first information layer 8 and the second information layer 24). The objective lens 27 condenses the laser beam 16 onto a recording layer of an information layer (the recording layer 4 in the case of the first information layer 8 and the second recording layer 19 in the case of the second information layer 24).

Information is recorded, erased and overwritten with respect to the information layers (e.g., the first information layer 8 and the second information layer 24) of the optical information recording medium by modulating the power of the laser beam 16 between a peak power (Pp (mW)) with a high power and a bias power (Pb (mW)) with a lower power. An amorphous phase is formed in a local part of the recording layer 4 or the second recording layer 19 by irradiation with the laser beam 16 having a peak power, and the amorphous phase becomes a recording mark. A region between the recording marks is irradiated with the laser beam 16 having a bias power, whereby a crystal phase (erasure portion) is formed. In the case of irradiation with the laser beam 16 having a peak power, a so-called multi-pulse composed of a pulse train generally is applied. The multi-pulse may be modulated in accordance with only the power level of the peak power and the bias power, or may be modulated in accordance with the power level in a range of 0 mW to a peak power.

Furthermore, a recorded information signal is reproduced by irradiating the optical information recording medium with the laser beam 16 having a reproduction power (Pr (mW)), and reading a signal obtained therefrom with a detector. The reproduction power is lower than the power level of either of the peak power and the bias power. The reproduction power is defined as follows: the optical state of a recording mark is not influenced by irradiation with the laser beam 16 having a power level of the reproduction power, and light reflected from the optical information recording medium has a light amount sufficient for reproducing the recording mark.

The numerical aperture NA of the objective lens 27 is in a range of preferably 0.5 to 1.1 (more preferably 0.6 to 1.0) so as to adjust the spot diameter of the laser beam in a range of 0.4 µm to 0.7 µm. The wavelength of the laser beam 16 is preferably 450 nm or less (more preferably 350 nm to 450 nm). The linear velocity of the optical information recording medium when recording information is in a range of 3 m/sec. to 20 m/sec. (more preferably, 4 m/sec. to 15 m/sec. where crystallization due to reproduced light is unlikely to occur and a sufficient erasure ratio is obtained.

When information is recorded on the first information layer 8, the focal point of the laser beam 16 is fixed on the recording layer 4, and information is recorded on the recording layer 4 with the laser beam 16 transmitted through the transparent layer 1. The information is reproduced using the laser beam 16 reflected from the recording layer 4 and transmitted through the transparent layer 1. When information is recorded on the second information layer 24, the focal point of the laser beam 16 is fixed on the second recording layer 19, and information is recorded with the laser beam transmitted through the transparent layer 1, the first information layer 8 and the optical separation layer 9. Information is reproduced by using the laser beam 16 reflected from the second recording layer 19 and transmitted through the optical separation layer 9, the first information layer 8 and the transparent layer 1.

In the case where guide grooves for guiding the laser beam 16 are formed on the substrate 14, and the optical separation layers, 9, 11 and 12, information may be recorded on a groove surface (grooves) closer to the incident side of the laser beam 16 or recorded on a groove surface (lands) farther from the incident side of the laser beam 16. Furthermore, information may be recorded on both the grooves and lands.

### Examples

Hereinafter, the present invention will be described by way of examples in more detail.

### Example 1

In Example 1, the first information layer 8 of the recording medium 15 shown in FIG. 1 was produced. The relationship between the refractive index n1, extinction coefficient k1 and thickness d1 of the transmittance adjusting layer 7, and the transmittance and reflectance of the first information layer 8 was checked. More specifically, samples were produced, each having the transparent layer 1 and the first information layer 8 including the transmittance adjusting layer 7 with varying material and thickness.

The samples were produced as follows. First, a polycarbonate substrate (diameter: 120 mm; thickness: 1100 µm) was prepared as the substrate 14. Then, the transmittance adjusting layer 7 (thickness: 2 nm to 140 nm), an Ag-Pd-Cu layer (thickness: 10 nm) as the reflection layer 6, a Ge-Si-N layer (thickness: 10 nm) as the upper side protection layer 5, a Ge₈Sb₂Te₁₁ layer (thickness: 6 nm) as the recording layer 4, a Ge-Si-N layer (thickness: 5 nm) as the lower side interface layer 3, and a ZnS-SiO₂ layer (thickness: 45 nm; SiO₂: 20 mol%) as the lower side protection layer 2 were stacked successively on the polycarbonate substrate. These layers were formed by sputtering. As the transmittance adjusting layer 7, a TiO₂ layer or a ZnS-SiO₂ layer (SiO₂: 20 mol%) was used. Finally, the lower side protection layer 2 was coated with a UV-curable resin, and the polycarbonate substrate (diameter: 120 mm; thickness: 90 µm) was brought into contact with the lower side protection layer 2 to perform spin coating. Thereafter, the resin was irradiated with UV-light to be cured, whereby the transparent layer 1 was formed. As described above, a plurality of samples for measuring transmittance were produced, which include the transmittance adjusting layer with varying material and thickness.

Herein, the thicknesses of the upper side protection layer 5 and the lower side protection layer 2 were determined exactly by calculation based on a matrix method. More specifically, these thicknesses were determined so as to satisfy the following two conditions: (1) in the case where the recording layer 4 is in a crystal phase, the reflectance Rc1 of the first information layer 8 in a flat portion of the substrate may fall in a range of 4 ≤ Rc1 ≤ 10 at a wavelength of 405 nm; and (2) in the case where the recording layer 4 is in an amorphous phase, the reflectance Ra1 of the first information layer 8 in a mirror surface portion of the substrate may fall in a range of 0.5 ≤ Ra1 ≤ 3 at a wavelength of 405 nm.

The samples thus obtained were first measured for a transmittance Ta1 (%) and a reflectance Ra1 (%) in the case where the recording layer 4 is in an amorphous phase. Thereafter, an initialization process of crystallizing the recording layer 4 was performed. Then, the transmittance Tc1 (%) and the reflectance Rc1 (%) in the case where the recording layer 4 is in a crystal phase were measured. The transmittance was measured by a spectroscope at a wavelength of 405 nm. On the other hand, the reflectance was measured by the recording/reproducing apparatus in FIG. 3. More specifically, a sample was rotated by the spindle motor 26, and the laser beam 16 with a wavelength of 405 nm was condensed so as to radiate to the recording layer 4 of the first information layer 8. The amount of reflected light was measured.

Measurement results of the transmittance and reflectance of the first information layer 8 are shown in Table 1. In Table 1, a symbol " X " represents that at least one of the transmittance Tc1 and Ta1 is 46% or less, and a symbol "O" represents that Tc1 and Ta1 are both larger than 46%. The refractive index n1 and the extinction coefficient k1 at a wavelength of 405 nm of the TiO₂ layer used for the upper side protection layer 5 were n1= 2.70 and k1 = 0.00, respectively. Furthermore, the refractive index n1 and the extinction coefficient k1 at a wavelength of 405 nm of the ZnS-SiO₂ layer used for the upper side protection layer 5 were n1 = 2.25 and k1 = 0.01, respectively.

**Table 1**

| Sample No. | Material for transmittance adjusting layer 7 | d1 (nm) | Rc1 (%) | Ra1 (%) | Tc1 (%) | Ta1 (%) | Evaluation |
|---|---|---|---|---|---|---|---|
| 1-a | TiO₂ | 2 | 6.0 | 0.8 | 42.2 | 43.9 | × |
| 1-b | TiO₂ | 5 | 5.1 | 0.5 | 46.3 | 47.2 | ○ |
| 1-c | TiO₂ | 10 | 4.8 | 0.5 | 48.6 | 49.2 | ○ |
| 1-d | TiO₂ | 20 | 5.4 | 0.8 | 51.0 | 52.5 | ○ |
| 1-e | TiO₂ | 30 | 9.4 | 3.0 | 46.5 | 47.1 | ○ |
| 1-f | TiO₂ | 35 | 13.7 | 4.1 | 41.5 | 42.9 | × |
| 1-g | TiO₂ | 75 | 6.5 | 1.0 | 40.1 | 42.0 | × |
| 1-h | TiO₂ | 80 | 4.9 | 0.6 | 46.1 | 47.3 | ○ |
| 1-i | TiO₂ | 90 | 5.2 | 0.7 | 51.6 | 52.8 | ○ |
| 1-j | TiO₂ | 100 | 13.3 | 4.0 | 47.1 | 48.9 | ○ |
| 1-k | TiO₂ | 110 | 13.7 | 4.6 | 39.5 | 41.9 | × |
| 1-1 | ZnS-SiO₂ | 3 | 5.9 | 0.7 | 38.0 | 38.6 | × |
| 1-m | ZnS-SiO₂ | 6 | 5.5 | 0.5 | 40.5 | 40.8 | × |
| 1-n | ZnS-SiO₂ | 15 | 5.4 | 0.7 | 45.0 | 45.9 | × |
| 1-o | ZnS-SiO₂ | 20 | 7.3 | 1.1 | 45.2 | 47.2 | × |
| 1-p | ZnS-SiO₂ | 30 | 9.6 | 2.2 | 43.0 | 45.3 | × |
| 1-q | ZnS-SiO₂ | 40 | 10.3 | 2.4 | 39.7 | 42.5 | × |
| 1-r | ZnS-SiO₂ | 90 | 5.8 | 0.9 | 37.5 | 38.0 | × |
| 1-s | ZnS-SiO₂ | 100 | 5.4 | 0.5 | 42.2 | 42.5 | × |
| 1-t | ZnS-SiO₂ | 120 | 7.1 | 1.0 | 43.7 | 44.6 | × |
| 1-u | ZnS-SiO₂ | 140 | 10.0 | 2.4 | 35.0 | 37.5 | × |

In the samples 1-b, 1-c, 1-d, 1-e, 1-h, 1-i and 1-j, the material for the transmittance adjusting layer 7 is TiO₂, the thickness d1 thereof is in a range of 5 nm (corresponding to (1/32)λ/n1) to 30 nm (corresponding to (13/16)λ/n1) or in a range of 80 nm (corresponding to (17/32)λ/n1) to 100 nm (corresponding to (11/16)λ/n1). As shown in Table 1, in these samples, the transmittances Tc1 and Ta1 are both larger than 46%, and satisfy -5 ≤ (Tc1 - Ta1) ≤ 5. On the other hand, in the sample 1-a having a thickness d1 of 2 nm (corresponding to (1/64)λ/n1), the sample 1-f having 35 nm (corresponding to (15/64)λn1), the sample 1-g having 75 nm (corresponding to (1/2)λ/n1) and the sample 1-k having 120 nm(corresponding to (51/64)λ/n1), the transmittances Tc1 and Ta1 are both smaller than 46%, which is insufficient.

In the case where the material for the transmittance adjusting layer 7 is ZnS-SiO₂, at least one of the transmittances Tc1 and Ta1 is smaller than 46%, so that the characteristics are insufficient. On the other hand, in the case where the material for the transmittance adjusting layer 7 is TiO₂, the difference (n1 - n2) between the refractive index n1 of the transmittance adjusting layer 7 and the refractive index n2 of the reflection layer 6 (the refractive index n2 of the Ag-Pd-Cu layer at a wavelength of 405 nm is 0.21) is large, so that the light confinement effect in the transmittance adjusting layer 7 becomes conspicuous. Therefore, it is considered that the light interference effect is enhanced; as a result, the transmittance becomes high. The light confinement effect is a phenomenon in which light is confined in a optically dense material with a large refractive index, which is applied to an optical fiber.

### Example 2

In Example 2, the relationship between the characteristics of the first information layer 8, and the material and thickness of the recording layer 4 was checked. More specifically, samples were produced in which the substrate 14, the first information layer 8 including the recording layer 4 with varying thickness, and the transparent layer 1 were stacked. Regarding the samples thus produced, the first information layer 8 was measured for an erasure ratio, a carrier to noise ratio (CNR), a reflectance and a transmittance.

The samples were produced as follows. First, a polycarbonate substrate (diameter: 120 mm; thickness: 1100 µm) with guide grooves for guiding the laser beam 16 was prepared as the substrate 14. Then, a TiO₂ layer (thickness: 15 nm) as the transmittance adjusting layer 7, an Ag-Pd-Cu layer (thickness: 5 nm to 10 nm) as the reflection layer 6, a Ge-Si-N layer (thickness: 10 nm) as the upper side protection layer 5, a Ge₈Sb₂Te₁₁ layer or (Sb_{0.7}Te_{0.3})₉₅Ge₅ (thickness: 1 nm to 10 nm) as the recording layer 4, a Ge-Si-N layer (thickness: 5 nm) as the lower side interface layer 3, and a ZnS-SiO₂ layer (thickness: 45 nm; SiO₂: 20 mol%) as the lower side protection layer 2 were stacked successively on the polycarbonate substrate. These layers were formed by sputtering. Finally, the lower side protection layer 2 was coated with a UV-curable resin, and the polycarbonate substrate (diameter: 120 mm; thickness: 90 µm) was brought into contact with the lower side protection layer 2 to perform spin coating. Thereafter, the resin was irradiated with UV-light to be cured, whereby the transparent layer 1 was formed. As described above, a plurality of samples were produced, which include the recording layer 4 with varying material and thickness.

Regarding the samples thus produced, the transmittance and the reflectance of the first information layer 8 were measured by the same method as that of Example 1. Thereafter, regarding the samples thus produced, the erasure ratio and the CNR of the first information layer 8 were measured by using the recording/reproducing apparatus 31 shown in FIG. 3. At this time, the wavelength of the laser beam 16 was set to be 405 nm. The numerical aperture NA of the objective lens 27 was set to be 0.85. The linear velocity of the samples at the time of measurement was set to be 5.0 m/sec. The shortest mark length was set to be 0.206 µm. The track pitch of the guide grooves of the substrate 14 was set to be 0.32 µm. Furthermore, information was recorded on the grooves.

The CNR was obtained by recording a mark with a length of 3T by a (8-16) modulation system, and measuring the CNR thereof by a spectrum analyzer. The erasure performance was evaluated by recording a mark with a length of 3T by a (8-16) modulation system, measuring the amplitude by a spectrum analyzer, overwriting a mark with a length of 11 T on the mark with a length of 3 T, measuring the amplitude of a 3T signal again, and calculating an attenuation factor of the 3T signal. Hereinafter, the attenuation factor of the 3T signal will be referred to as an erasure ratio.

Measurement results of the CNR, erasure ratio, reflectance and transmittance of the first information layer 8 are shown in Table 2. The material for the recording layer 4 in the samples 2-a to 2-g is Ge₈Sb₂Te₁₁, and the material for the recording layer 4 in the samples 2-h to 2-n is (Sb_{0.7}Te_{0.3})₉₅Ge₅. In Table 2, a symbol "X" represents that at least one condition of the following is seen: the CNR is less than 45 dB; the erasure ratio is less than 25 dB; the transmittance Tc1 is 46% or less and Ta1 is 46% or less. A symbol "O" represents that the CNR is 45 dB or more, the erasure ratio is 25 dB or more, and Tc1 and Ta1 are both larger than 46%.

**Table 2**

| Sample No. | Thickness of recording layer 4 (nm) | CNR (dB) | Easure ratio (-dB) | Rc1 (%) | Ra1 (%) | Tc1 (%) | Ta1 (%) | Evaluation |
|---|---|---|---|---|---|---|---|---|
| 2-a | 2 | 30 | 10 | 2.2 | 1.8 | 76.9 | 73.6 | × |
| 2-b | 3 | 45 | 25 | 3.5 | 0.9 | 64.5 | 62.7 | ○ |
| 2-c | 4 | 49 | 27 | 4.2 | 0.9 | 59.1 | 58.2 | ○ |
| 2-d | 6 | 55 | 30 | 5.4 | 0.8 | 53.6 | 54.0 | ○ |
| 2-e | 8 | 56 | 34 | 7.5 | 1.5 | 48.3 | 48.9 | ○ |
| 2-f | 9 | 56 | 35 | 8.6 | 2.1 | 46.9 | 47.5 | ○ |
| 2-g | 10 | 55 | 35 | 9.6 | 2.6 | 42.8 | 43.4 | × |
| 2-h | 0.5 | 32 | 15 | 2.0 | 1.5 | 80.2 | 72.7 | × |
| 2-i | 1 | 46 | 26 | 2.5 | 1.3 | 76.8 | 68.6 | ○ |
| 2-j | 2 | 48 | 27 | 3.2 | 1.1 | 70.4 | 62.5 | ○ |
| 2-k | 4 | 50 | 29 | 4.8 | 1.0 | 59.0 | 52.2 | ○ |
| 2-1 | 5 | 51 | 30 | 5.5 | 1.1 | 52.3 | 46.4 | ○ |
| 2-m | 7 | 54 | 35 | 7.5 | 1.4 | 45.5 | 39.3 | × |
| 2-n | 8 | 55 | 36 | 8.8 | 1.9 | 41.7 | 36.1 | × |

In the samples 2-b, 2-c, 2-d, 2-e and 2-f including the recording layer 4 made of Ge₈Sb₂Te₁₁ and having a thickness of 3 nm to 9 nm, and the samples 2-i, 2-j, 2-k and 2-1 made of (Sb_{0.7}Te_{0.3})₉₅Ge₅ and having a thickness of 1 nm to 7 nm, the transmittance is 46% or more and the CNR and erasure ratio are sufficient. In the sample 2-a including the recording layer 4 made of Ge₈Sb₂Te₁₁ and having a thickness of 2 nm, and the sample 2-h including the recording layer 4 made of (Sb_{0.7}Te_{0.3})₉₅Ge₅ and having a thickness of 0.5 nm, the thickness of the recording layer 4 is thin, so that the transmittance is sufficient; however, the CNR and erasure ratio are low. Furthermore, in the sample 2-g including the recording layer 4 made of Ge₈Sb₂Te₁₁ and having a thickness of 10 nm and the sample 2-n made of (Sb_{0.7}Te_{0.3})₉₅Ge₅ and having a thickness of 8 nm, although the CNR and erasure ratio are high, the transmittance is less than 46%. From the above results, the thickness of the recording layer 4 preferably is in a range of 3 nm to 9 nm in the case where the material is Ge₈Sb₂Te₁₁, and preferably is in a range of 1 nm to 7 nm in the case where the material is (Sb_{0.7}Te_{0.3})₉₅Ge₅.

### Example 3

In Example 3, the relationship between the characteristics of the first information layer 8 and the thickness d2 of the reflection layer 6 was checked. More specifically, samples were produced in which the substrate 14, the first information layer 8 including the reflection layer 6 with varying thickness, and the transparent layer 1 were stacked. Regarding the samples thus produced, the first information layer 8 was measured for a CNR, an erasure ratio, a reflectance and a transmittance.

The samples were produced as follows. First, a polycarbonate substrate (diameter: 120 mm; thickness: 1100 µm) with guide grooves for guiding the laser beam 16 was prepared as the substrate 14. Then, a TiO₂ layer (thickness: 15 nm) as the transmittance adjusting layer 7, an Ag-Pd-Cu layer (thickness: 2 nm to 20 nm) as the reflection layer 6, a Ge-Si-N layer (thickness: 10 nm) as the upper side protection layer 5, a Ge₈Sb₂Te₁₁ layer (thickness: 6 nm) as the recording layer 4, a Ge-Si-N layer (thickness: 5 nm) as the lower side interface layer 3, and a ZnS-SiO₂ layer (thickness: 45 nm; SiO₂: 20 mol%) as the lower side protection layer 2 were stacked successively on the polycarbonate substrate. These layers were formed by sputtering. Then, the lower side protection layer 2 was coated with a UV-curable resin, and the polycarbonate substrate (diameter: 120 mm; thickness: 90 µm) was brought into contact with the lower side protection layer 2 to perform spin coating. Thereafter, the resin was irradiated with UV-light to be cured, whereby the transparent layer 1 was formed. As described above, a plurality of samples were produced, which include the reflection layer 6 with varying thickness.

Regarding the samples thus produced, the CNR, erasure ratio, reflectance and transmittance of the first information layer 8 were measured by the same method as that of Example 2. At this time, the wavelength of the laser beam 16 was set to be 405 nm. The numerical aperture NA of the objective lens 27 was set to be 0.85. The linear velocity of the samples at the time of measurement was set to be 5.0 m/sec. The shortest mark length was set to be 0.206 µm. The track pitch of the guide grooves of the substrate 14 was set to be 0.32 µm. Furthermore, information was recorded on the grooves.

Measurement results of the CNR, erasure ratio, reflectance and transmittance of the first information layer 8 are shown in Table 3. In Table 3, a symbol "×" represents that at least one condition of the following is seen: the CNR is less than 45 dB; the erasure ratio is less than 25 dB; the transmittance Tc1 is 46% or less and Ta1 is 46% or less. A symbol "O represents that the CNR is 45 dB or more, the erasure ratio is 25 dB or more, and Tc1 and Ta1 are both larger than 46%.

**Table 3**

| Sample No. | Film thickness d2 (nm) | CNR (dB) | Erasure ratio (-dB) | Rc1 (%) | Ra1 (%) | Tc1 (%) | Ta1 (%) | Evaluation |
|---|---|---|---|---|---|---|---|---|
| 3-a | 2 | 40 | 20 | 3.3 | 2.5 | 61.5 | 58.4 | × |
| 3-b | 3 | 45 | 25 | 4.0 | 2.0 | 60.2 | 57.7 | ○ |
| 3-c | 5 | 50 | 30 | 4.5 | 1.5 | 57.4 | 56.0 | ○ |
| 3-d | 10 | 55 | 30 | 5.4 | 0.8 | 49.6 | 50.3 | ○ |
| 3-e | 15 | 55 | 27 | 7.3 | 0.9 | 46.2 | 48.2 | ○ |
| 3-f | 20 | 50 | 20 | 9.2 | 1.6 | 38.5 | 40.7 | × |

In the samples 3-b, 3-c, 3-d and 3-e including the reflection layer 6 with a thickness d2 of 3 nm to 15 nm, heat accumulated in the recording layer 4 moves to the reflection layer 6 with a sufficient speed and sufficient heat is accumulated in the recording layer 4. Therefore, in these samples, the recording layer 4 is crystallized and made amorphous satisfactorily, and the CNR and erasure ratio are sufficient. Furthermore, as the thickness of the reflection layer 6 is increased, the reflectance is increased and the transmittance is decreased. In the sample 3-a including the reflection layer 6 with a thickness d2 of 2 nm, the reflection layer 6 is thin, so that heat accumulated in the recording layer 4 does not diffuse, and the reflectance is decreased. Therefore, the CNR and erasure ratio are both low. Furthermore, in the sample 3-f including the reflection layer 6 with a thickness d2 of 20 nm, the reflection layer 6 is thick, so that the transmittance is low and sufficient heat is not accumulated in the recording layer 4, which makes it difficult for the recording layer 4 to be crystallized. Therefore, the erasure ratio is low.

### Example 4

In Example 4, the relationship between the characteristics of the first information layer 8 and the thickness d3 of the upper side protection layer 5 was checked. More specifically, samples were produced in which the substrate 14, the first information layer 8 including the upper side protection layer 5 with varying thickness d3, and the transparent layer 1 were stacked. Regarding the samples thus produced, the first information layer 8 was measured for a CNR, an erasure ratio, a reflectance and a transmittance.

The samples were produced as follows. First, a polycarbonate substrate (diameter: 120 mm; thickness: 1100 µm) with guide grooves for guiding the laser beam 16 was prepared as the substrate 14. Then, a TiO₂ layer (thickness: 15 nm) as the transmittance adjusting layer 7, an Ag-Pd-Cu layer (thickness: 10 nm) as the reflection layer 6, a Ge-Si-N layer (thickness: 1 nm to 80 nm) as the upper side protection layer 5, a Ge₈Sb₂Te₁₁ layer (thickness: 6 nm) as the recording layer 4, a Ge-Si-N layer (thickness: 5 nm) as the lower side interface layer 3, and a ZnS-SiO₂ layer (thickness: 45 nm; SiO₂: 20 mol%) as the lower side protection layer 2 were stacked successively on the polycarbonate substrate. These layers were formed by sputtering. Finally, the lower side protection layer 2 was coated with a UV-curable resin, and the polycarbonate substrate (diameter: 120 mm; thickness: 90 µm) was brought into contact with the lower side protection layer 2 to perform spin coating. Thereafter, the resin was irradiated with UV-light to be cured, whereby the transparent layer 1 was formed. As described above, a plurality of samples were produced, which include the upper side protection layer 5 with varying thickness.

Regarding the samples thus produced, the CNR, erasure ratio, reflectance and transmittance of the first information layer 8 were measured by the same method as that of Example 2. At this time, the wavelength λ of the laser beam 16 was set to be 405 nm. The numerical aperture NA of the objective lens 27 was set to be 0.85. The linear velocity of the samples at the time of measurement was set to be 5.0 m/sec. The shortest mark length was set to be 0.206 µm. The track pitch of the guide grooves of the substrate 14 was set to be 0.32 µm. Furthermore, information was recorded on the grooves.

Measurement results of the CNR, erasure ratio, reflectance and transmittance of the first information layer 8 are shown in Table 4. In Table 4, a symbol "×" represents that at least one condition of the following is satisfied: the CNR is less than 45 dB; the erasure ratio is less than 25 dB; the transmittance Tc1 is 46% or less and Ta1 is 46% or less. A symbol "○" represents that the CNR is 45 dB or more, the erasure ratio is 25 dB or more, and Tc1 and Ta1 are both larger than 46%. The refractive index n3 of the Ge-Si-N layer used as the upper side protection layer 5 at a wavelength of 405 nm was 2.33.

**Table 4**

| Sample No. | Thickness d3 (nm) | CNR (dB) | Erasure ratio (-dB) | Rc1 (%) | Ra1 (%) | Tc1 (%) | Ta1 (%) | Evaluation |
|---|---|---|---|---|---|---|---|---|
| 4-a | 1 | 46 | 15 | 7.5 | 1.8 | 52.0 | 53.0 | × |
| 4-b | 2 | 49 | 25 | 6.8 | 1.5 | 51.5 | 52.5 | ○ |
| 4-c | 5 | 52 | 28 | 6.0 | 1.2 | 51.1 | 52.2 | ○ |
| 4-d | 10 | 55 | 30 | 5.4 | 0.8 | 49.6 | 50.3 | ○ |
| 4-e | 30 | 52 | 32 | 4.2 | 0.5 | 49.2 | 47.5 | ○ |
| 4-f | 40 | 48 | 32 | 4.6 | 1.5 | 46.2 | 46.5 | ○ |
| 4-g | 50 | 44 | 33 | 5.0 | 2.0 | 42.8 | 43.3 | × |

In the samples 4-b, 4-c, 4-d, 4-e and 4-f, the thickness d3 of the upper side protection layer 5 is in a range of 2 nm (corresponding to (1/64)λ/nm) to 40 nm (15/64)λ/n3). In these samples, the distance between the recording layer 4 and the reflection layer 6 is set so that sufficient heat is accumulated in the recording layer 4, and heat accumulated in the recording layer 4 moves to the reflection layer 6 with a sufficient speed. Therefore, in these samples, the recording layer is crystallized and made amorphous satisfactorily, and the CNR and erasure ratio are sufficient. In the sample 4-a including the upper side protection layer with a thickness d3 of 1 nm (corresponding to (1/128)λ/n3), the distance between the recording layer 4 and the reflection layer 6 is too short. Therefore, sufficient heat is not accumulated in the recording layer 4, which makes it difficult to crystallize the recording layer 4, resulting in a decrease in an erasure ratio. Furthermore, in the sample 4-g including the upper side protection layer 5 with a thickness d3 of 50 nm (corresponding to (18/64)λ/n3), the distance between the recording layer 4 and the reflection layer 6 is too large. Therefore, heat accumulated in the recording layer 4 is unlikely to move to the reflection layer 6, which makes it difficult for the recording layer 4 to be made amorphous, resulting in a decrease in a CNR.

### Example 5

In Example 5, regarding the recording medium 25 in FIG. 2, the relationship between the characteristics of the first and second information layers 8 and 24, and the materials for the recording layer 4 and the second recording layer 19 was checked. The first information layer 8 was formed based on the results of Examples 1 to 4. Regarding the recording medium 25 thus produced, the first information layer 8 was measured for a CNR, an erasure ratio, a reflectance and a transmittance, and the second information layer 24 was measured for a recording sensitivity, a CNR and a reflectance.

The samples were produced as follows. First, a polycarbonate substrate (diameter: 120 mm; thickness: 1100 µm) with guide grooves for guiding the laser beam 16 was prepared as the substrate 14. Then, an Ag-Pd-Cu layer (thickness: 80 nm) as the second reflection layer 23, an Al-Cr layer (thickness: 10 nm) as the second metal layer 22, a ZnS-SiO₂ layer (thickness: 17 nm, SiO₂: 20 mol%) as the second upper side protection layer 21, a Ge-Si-N layer (thickness: 5 nm) as the second upper side protection layer 20, the second recording layer 29 (thickness: 12 nm), a Ge-Si-N layer (thickness: 5 nm) as the second lower side interface layer 18, a ZnS-SiO₂ layer (thickness: 56 nm; SiO₂: 20 mol%) as the second lower side protection layer 17 were stacked successively on the polycarbonate substrate. These layers were formed by sputtering. Ge₈Sb₂Te₁₁ or (Sb_{0.7}Te_{0.3})₉₅Ge₅ was used for the second recording layer 19. Furthermore, the thicknesses of the second upper side protection layer 21 and the second lower side protection layer 17 were determined strictly by calculation based on a matrix method. These thicknesses were determined so that, at a wavelength of 405 nm, the amount of reflected light when the second recording layer 19 is in a crystal phase is larger than that when the second recording layer 19 is in an amorphous phase and the amount of reflected light is changed greatly between when the second recording layer 19 is in a crystal phase and when the second recording layer 19 is in an amorphous phase.

Next, an initialization process of crystallizing the entire surface of the second recording layer 19 was performed. Then, the second lower side protection layer 17 was coated with a UV-curable resin. A substrate (die) with guide grooves formed thereon was placed on the second lower side protection layer 17, followed by spin coating. Thereafter, the resin was cured. The substrate (die) was peeled. During this process, the optical separation layer 9 was formed, in which guide grooves for guiding the laser beam 16 were formed on the first information layer 8 side.

Thereafter, a TiO₂ layer (thickness: 15 nm) as the transmittance adjusting layer 7, an Ag-Pd-Cu layer (thickness: 5 nm to 10 nm) as the reflection layer 6, a Ge-Si-N layer (thickness: 10 nm) as the upper side protection layer 5, the recording layer 4, a Ge-Si-N layer (thickness: 5 nm) as the lower side interface layer 3 and a ZnS-SiO₂ layer (thickness: 45 nm, SiO₂: 20 mol%) as the lower side protection layer 2 were stacked successively on the optical separation layer 9. These layers were formed by sputtering. Herein, Ge₈Sb₂Te₁₁ (thickness: 6 nm) or (Sb_{0.7}Te_{0.3})₉₅Ge₅ (thickness: 5 nm) was used for the recording layer 4. Thereafter, an initialization process of crystallizing the entire surface of the recording layer 4 was performed. Finally, the lower side protection layer 2 was coated with a UV-curable resin, and the polycarbonate substrate (diameter: 120 mm; thickness: 90 µm) was brought into contact with the lower side protection layer 2 to perform spin coating. Thereafter, the resin was irradiated with UV-light to be cured, whereby the transparent layer 1 was formed. As described above, a plurality of samples were produced, which include the second recording layer 19 and the recording layer 4 made of varying materials.

In order to measure the transmittance of the first information layer 8, samples also were produced in the same way as in the above samples, except that there were no second information layer 24 and optical separation layer 9.

Regarding the samples thus produced, the first information layer 8 was measured for a CNR, an erasure ratio and a reflectance by the same method as that of Example 2. Furthermore, the second information layer 24 was measured for a CNR, a recording sensitivity and reflectances Ra2 (%) and Rc2 (%). The reflectance Ra2 (%) is a reflectance in the case where the second recording layer 19 is in an amorphous phase, and the reflectance Rc2 is a reflectance in the case where the second recording layer 19 is in a crystal phase. Herein, the recording sensitivity is defined as a peak power Pp (mW) that is 1.3 times the peak power (mW) for giving an amplitude lower by 3 dBm from a saturated value of an amplitude (dBm). In the measurement, the wavelength of the laser beam 16 was set to be 405 nm. The numerical aperture NA of the objective lens 27 was set to be 0.85. The linear velocity of the samples at the time of measurement was set to be 5.0 m/sec. The shortest mark length was set to be 0.206 µm. The track pitch of the guide grooves of the substrate 14 was set to be 0.32 µm. Furthermore, information was recorded on the grooves. Furthermore, using the samples without the second information layer 24, the first information layer 8 was measured for a transmittance by the same method as that of Example 1.

Measurement results of the CNR, the erasure ratio, the reflectance and the transmittance of the first information layer 8, and the CNR, the recording sensitivity and the reflectance of the second information layer 24 are shown in Table 5. In the composition of the recording layer 4 and the second recording layer 19 shown in Table 5, GeSbTe means Ge₈Sb₂Te₁₁, and (SbTe)Ge means (Sb_{0.7}Te_{0.3})₉₅Ge₅.

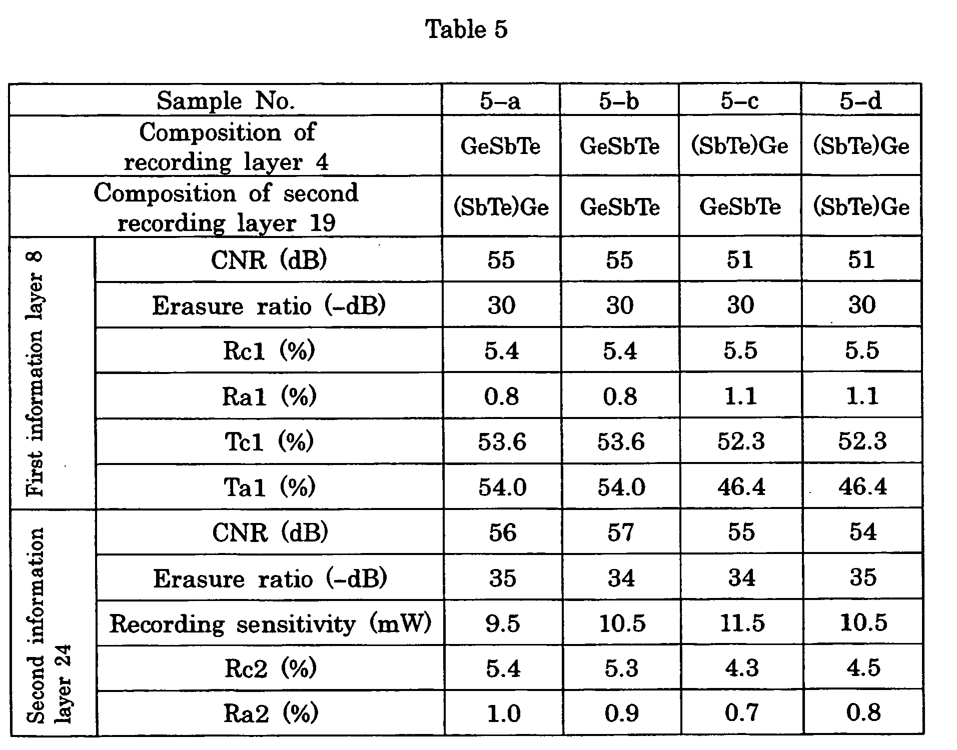

As shown in Table 5, in all of the samples, satisfactory results are obtained in which both the first information layer 8 and the second information layer 24 have a CNR of 50 dB or more and an erasure ratio of 30 dB or more. Among them, in the samples 5-a and 5-b including the recording layer 4 with a composition of Ge₈Sb₂Te₁₁, the transmittance of the first information layer 8 is high, so that the CNR, recording sensitivity and reflectance of the second information layer 24 are satisfactory. The reason for this is as follows: the absorption coefficient of Ge₈Sb₂Te₁₁, which is a Ge-Sb-Te ternary composition, is smaller than that of (Sb_{0.7}Te_{0.3})₉₅Ge₅, which is a (Sb-Te)-Ml type composition; as a result, the transmittance of the first information layer 8 is increased.

### Example 6

In Example 6, the same experiment as that of Example 5 was conducted, except that the material for the recording layer 4 or the material for the second recording layer 19 was varied. More specifically, the recording layer 4 or the second recording layer 19 was formed by using a material represented by the composition of (Ge-M1)₈Sb₂Te₁₁ (M1 is Sn or Pb). Consequently, similar results to those of Example 5 were obtained. This composition was effective particularly for recording/reproducing at a high linear velocity (6 m/sec. to 10 m/sec.).

### Example 7

In Example 7, the same experiment as that of Example 5 was conducted, except that the material for the recording layer 4 or the material for the second recording layer 19 was varied. More specifically, the recording layer 4 or the second recording layer 19 was formed by using a material represented by the composition of (Ge₈Sb₂Te₁₁)₉₅M₂₅. Herein, as the element M2, Si, Ti, V, Cr, Mn, Fe, Co, Ni, Cu, Se, Zr, Nb, Mo, Ru, Rh, Pd, Ag, In, Sn, Ta, W, Os, Ir, Pt, Au or Bi was added. Consequently, similar results to those of Example 5 were obtained. This composition was effective particularly for recording/reproducing at a low linear velocity (3 m/sec. to 4 m/sec.).

### Example 8

In Example 8, the same experiment as that of Example 5 was conducted, except that the material for the recording layer 4 or the material for the second recording layer 19 was varied. More specifically, the recording layer 4 or the second recording layer 19 was formed by using a material represented by the composition of .(Sb_{0.7}Te_{0.3})₉₅M₃₅. Herein, as the element M3, Ag, In, Sn, Se, Bi, Au or Mn was added. Consequently, similar results to those of Example 5 were obtained.

### Example 9

In Example 9, the first information layer 8 of the recording medium 15 shown in FIG. 1 was subjected to optical calculation, and the relationship among the refractive index n1 and the extinction coefficient k1 of the transmittance adjusting layer 7, the refractive index n2 and the extinction coefficient k2 of the reflection layer 6, and the transmittance of the first information layer 8 was checked. More specifically, the change in a transmittance of the first information layer 8 was checked when n1 and k1 of the transmittance adjusting layer 7 was changed.

In the optical calculation, the thickness of the transmittance adjusting layer 7 was set to be 2 nm to 140 nm. The thickness of the reflection layer 6 was set to be 10 nm at n2 = 0.2 and k2 = 2.0 or 5 nm at n2 = 0.2 and k2 = 4.0. Furthermore, the thickness of the upper side protection layer 5 was assumed to be 10 nm at n3 = 2.3 and k3 = 0.1. Furthermore, the thickness of the recording layer 4 was assumed to be 5 nm. In the case of the recording layer 4 in an amorphous phase, it was assumed that n = 3.4 and k = 1.9. Furthermore, the thickness of the lower side interface layer 3 was set to be 5 nm at n = 2.3 and k = 0.1. Furthermore, the lower side protection layer 2 was set to be 45 nm at n = 2.3 and k = 0.0. A configuration interposing the above layers by polycarbonate substrates (n = 1.62, k = 0.00) was assumed and was subjected to optical calculation.

In the optical calculation, the thicknesses of the transmittance adjusting layer 7 and the lower side protection layer 2 were determined strictly by calculation based on a matrix method. More specifically, these thicknesses were determined so that (1) the reflectance Ra1 of the first information layer 8 at a mirror surface portion of the substrate is minimized at a wavelength of 405 nm in the case where the recording layer 4 is in an amorphous phase; and (2) the transmittance Ta1 of the first information layer 8 is maximized at a mirror surface portion of the substrate at a wavelength of 405 nm in the case where the recording layer 4 is in an amorphous phase.

Under the above assumption, the optical calculation was conducted by varying n1 and k1 of the transmittance adjusting layer 7. Thus, the reflectance Ra1 (%) and the transmittance Ta1 (%) of the first information layer 8 in the case of the recording layer 4 in an amorphous phase was calculated. The results are shown in Table 6. In Table 6, a symbol O represents Ra1 ≤ 5.0 and Ta1 > 46, and a symbol X represents the other ranges.

**Table 6**

| Calculation No. | n1 | n2 | n1-n2 | k1 | K2 | k2-k1 | Ra1 (%) | Ta1 (%) | Evaluation |
|---|---|---|---|---|---|---|---|---|---|
| 6-a | 1.0 | 0.2 | 0.8 | 1.5 | 2.0 | 0.5 | 6.4 | 27.5 | × |
| 6-b | 1.0 | 0.2 | 0.8 | 0.5 | 2.0 | 1.0 | 4.3 | 37.0 | × |
| 6-c | 1.0 | 0.2 | 0.8 | 0.0 | 2.0 | 2.0 | 3.9 | 41.3 | × |
| 6-d | 1.0 | 0.2 | 0.8 | 0.0 | 4.0 | 4.0 | 6.1 | 38.1 | × |
| 6-e | 1.7 | 0.2 | 1.5 | 1.5 | 2.0 | 0.5 | 4.2 | 33.1 | × |
| 6-f | 1.7 | 0.2 | 1.5 | 0.5 | 2.0 | 1.0 | 2.9 | 42.0 | × |
| 6-g | 1.7 | 0.2 | 1.5 | 0.0 | 2.0 | 2.0 | 2.3 | 48.0 | ○ |
| 6-h | 1.7 | 0.2 | 1.5 | 0.0 | 4.0 | 4.0 | 3.9 | 46.5 | ○ |
| 6-i | 2.7 | 0.2 | 2.5 | 1.5 | 2.0 | 0.5 | 2.9 | 37.1 | × |
| 6-j | 2.7 | 0.2 | 2.5 | 0.5 | 2.0 | 1.0 | 2.0 | 46.1 | ○ |
| 6-k | 2.7 | 0.2 | 2.5. | 0.0 | 2.0 | 2.0 | 1.4 | 51.1 | ○ |
| 6-1 | 2.7 | 0.2 | 2.5 | 0.0 | 4.0 | 4.0 | 2.0 | 52.5 | ○ |
| 6-m | 3.7 | 0.2 | 3.5 | 1.5 | 2.0 | 0.5 | 3.2 | 39.2 | × |
| 6-n | 3.7 | 0.2 | 3.5 | 0.5 | 2.0 | 1.0 | 2.6 | 48.3 | ○ |
| 6-o | 3.7 | 0.2 | 3.5 | 0.0 | 2.0 | 2.0 | 1.8 | 53.9 | ○ |
| 6-p | 3.7 | 0.2 | 3.5 | 0.0 | 4.0 | 4.0 | 2.0 | 50.9 | ○ |

As shown in Table 6, in the case where 1.5 ≤ (n1 - n2) and 1.5 ≤ (k2 - k1) are satisfied, Ra1 and Ra1 both take satisfactory values.

### Industrial Applicability

As described above, in the optical information recording medium of the present invention, the transmittance of the first information layer can be increased. Therefore, recording/reproducing can be performed satisfactorily with respect to a plurality of information layers by using a violet laser. Thus, in the optical information recording medium of the present invention, high-density recording can be performed with high reliability.

## Claims

1. An optical information recording medium (15 ; 25) for recording and reproducing information by irradiation with a laser beam (16) having a wavelength λ of 450 nm or less, comprising:
a substrat (14); and
a plurality of information layers (8, 10, 13; 8, 24) formed on the substrate (14),
wherein a first information layer (8) closest to an incident side of the laser beam (16) among the plurality of information layers includes a recording layer (4) a reflection layer (6) and a transmittance adjusting layer (7) in this order from the incident side, and
the recording layer (4) is reversibly changed between a crystal phase and an amorphous phase by irradiation with the laser beam (16), **characterised in that:**
a transmittance of the first information layer (8) at the wavelength λ in a case of the recording layer (4) in a crystal phase is Tc1 (%) and a transmittance of the first information layer (8) at the wavelength λ in a case of the recording layer (4) in an amorphous phase is Ta1 (%), wherein the Tc1 and Ta1 satisfy 46 < Tc1 and 46 < Ta1;
a refractive index and an extinction coefficient of the transmittance adjusting layer (7) at the wavelength λ are n1 and k1, respectively, and a refractive index and an extinction coefficient of the reflection layer (6) at the wavelength λ are n2 and k2, respectively, wherein the n1, the k1, the n2 and the k2 satisfy 1.5 ≤ (n1 - n2) and 15 ≤ (k2 - k1); and
the transmittance adjusting layer (7) contains at least one selected from the group consisting of TiO₂, ZrO₂, ZnO, Nb₂O₅, Ta₂O₅, SiO₂, Al₂O₃, Bi₂O₃, Cr-N, Ge-Si-Cr-N and ZnS.

2. An optical information recording medium (15, 25) according to claim 1,
wherein the transmittance adjusting layer (7) contains an oxide of Ti as a main component.

3. The optical information recording medium according to claim 1, wherein the n1 and the k1 satisfy 2.4 ≤ n1 and k1 ≤ 0.1.

4. The optical information recording medium according to claim 1, wherein the n2 and the k2 satisfy n2 ≤ 2.0 and 1.0 ≤ k2.

5. The optical information recording medium according to claim 1 or 2,
wherein a reflectance of the first information layer (8) at the wavelength λ in the case of the recording layer (4) in a crystal phase is Rc1 (%), and a reflectance of the first information layer (8) at the wavelength λ in the case of the recording layer (4) in an amorphous phase is Ra1 (%), the Rc1 and the Ra1 satisfy Ra1 < Rc1 and 0.1 ≤ Ra1 ≤ 5.

6. The optical information recording medium according to claim 1 or 2,
wherein a reflectance of the first information layer (8) at the wavelength λ in the case of the recording layer (4) in a crystal phase is Rc1 (%), and a reflectance of the first information layer (8) at the wavelength λ in the case of the recording layer (4) in an amorphous phase is Ra1 (%), the Rc1 and the Ra1 satisfy Ra1 < Rc1 and 4 ≤ Rc1 ≤ 15.

7. The optical information recording medium according to claim 1 or 2,
wherein the Tc 1 and the Ta1 satisfy -5 ≤ (Tc1 -Ta1) ≤ 5.

8. The optical information recording medium according to claim 1 or 2,
wherein a thickness d1 of the transmittance adjusting layer (7) and the wavelength λ satisfy (1/32)λ/n1 ≤ d1 ≤ (3/16)λ/n1 or (17/32)λ/n1 ≤d1≤ (11/16)λ/n1.

9. The optical information recording medium according to claim 1 or 2,
wherein a thickness d1 of the transmittance adjusting layer (7) is in a range of 5 nm to 30 nm or in a range of 80 nm to 100 nm.

10. The optical information recording medium according to claim 1 or 2, wherein the recording layer (4) is made of a material represented by a composition formula: GeₐSb_{b}Te₃₊ₐ (where 0 < a ≤ 25, 1.5 ≤ b ≤ 4).

11. The optical information recording medium according to claim 1 or 2,
wherein the recording layer (4) is made of a material represented by a composition formula: (Ge-M1)ₐSb_{b}Teₛ₊ₐ (where M1 is at least one element selected from the group consisting of Sn and Pb; 0 < a ≤ 25; 1.5 ≤ b ≤ 4).

12. The optical information recording medium according to claim 1 or 2,
wherein the recording layer (4) s made of a material represented by a composition formula: (GeₐSb_{b}Ta₃₊ₐ)_{100-c}M2_{c} (where M2 is at least one element selected from the group consisting of Si, Ti, V, Cr, Mn, Fe, Co, Ni, Cu, Se, Zr, Nb, Mo, Ru, Rh, Pd, Ag, In, Sn, Ta, W, Os, Ir, Pt, Au and Bi; 0 < a ≤ 25; 1.5 ≤ b ≤ 4; 0 < c ≤ 20).

13. The optical information recording medium according to claim 1 or 2,
wherein the recording layer (4) is made of a material represented by a composition formula: (SbₓTe₁₀₀₋ₓ)_{100-y}M3_{y}, (where M3 is at least one element selected from the group consisting ofAg, In, Ge, Sn, Se, Bi, Au and Mn; 50 ≤ x ≤ 95; 0 < y ≤ 20).

14. The optical information recording medium according to claim 1 or 2,
wherein a thickness of the recording layer (4) is in a range of 1 nm to 9 nm.

15. The optical information recording medium according to claim 13, wherein the reflection layer (6) contains at least one element selected from the group consisting of Ag, Au, Cu and Al, and
a thickness d2 of the reflection layer (6) is in a range of 3 nm to 15 nm.

16. The optical information recording medium according to claim 14, further comprising an upper side protection layer (5) disposed between the recording layer (4) and the reflection layer (6),
the upper side protection layer (5) containing at least one selected from the group consisting of TiO₂, ZrO₂, ZnO, Nb₂O₅, Ta₂O₅, SiO₂, Al₂O₃, Bi₂O₃, C-N, Ti-N, Zr-N, Nb-N, Ta-N, Si-N, Ge-N, Cr-N, Al-N, Ge-Si-N, Ge-Cr-N, ZnS, SiC and C.

17. The optical information recording medium according to claim 16, wherein a refractive index n3 and a thickness d3 of the upper side protection layer (5) and the wavelength λ satisfy (1/64)λ/n3 ≤ d3 ≤ (15/64)λ/n3.

18. The optical information recording medium according to claim 16, wherein a thickness d3 of the upper side protection layer (5) is in a range of 2 nm to 40 nm.

19. The optical information recording medium according to claim 16, further comprising an interface layer disposed on an interface between the upper side protection layer (5) and the recording layer (4), and
the interface layer contains at least one selected from the group consisting of C-N, Ti-N, Zr-N, Nb-N, Ta-N, Si-N, Ge-N, Cr-N, Al-N, Ge-Si-N, Ge-Cr-N and C.

20. The optical information recording medium according to claim 14, wherein the first information layer (8) further includes a lower side protection layer (2) disposed on the incident side with respect to the recording layer

21. The optical information recording medium according to claim 20, further comprising an interface layer (3) disposed on an interface between the lower side protection layer (2) and the recording layer (4)
wherein the interface layer (3) contains at least one selected from the group consisting of C-N, Ti-N, Zr-N, Nb-N, Ta-N, Si-N, Ge-N, Cr-N, Al-N, Ge-Si-N, Ge-Cr-N and C.

## Patentansprüche

1. Optisches Informationsaufzeichnungsmedium (15, 25) zum Aufzeichnen und Wiedergeben von Informationen durch Bestrahlung mit einem Laserstrahl (16) mit einer Wellenlänge λ von 450 nm oder weniger mit:
einem Substrat (14), und
einer Mehrzahl von Informationsschichten (8, 10, 13, 8, 24), die auf dem Substrat (14) gebildet sind,
wobei eine erste Informationsschicht (8), die am dichtesten zu einer Einfallseite des Laserstrahls (16) aus der Mehrzahl von Informationsschichten ist, eine Aufzeichnungsschicht (4), eine Reflexionsschicht (6) und eine Transmissionsgrad-Einstellschicht (7) in dieser Reihenfolge von der Einfallseite umfasst, und
die Aufzeichnungsschicht (4) reversibel zwischen einer kristallinen Phase und einer amorphen Phase durch Bestrahlung mit dem Laserstrahl (16) geändert ist, **dadurch gekennzeichnet, dass**:
ein Transmissionsgrad der ersten Informationsschicht (8) bei der Wellenlänge λ in einem Fall der Aufzeichnungsschicht (4) in einer kristallinen Phase Tc1 (%) ist und ein Transmissionsgrad der ersten Informationsschicht (8) bei der Wellenlänge λ in einem Fall der Aufzeichnungsschicht (4) in einer amorphen Phase Ta1 (%) ist, wobei Tc1 und Ta1 46 < Tc1 und 46 < Ta1 erfüllen,
ein Brechungsindex und ein Extinktionskoeffizient der Transmissionsgrad-Einstellschicht (7) bei der Wellenlänge λ n1 bzw. k1 sind, und ein Brechungsindex und ein Extinktionskoeffizient der Reflexionsschicht (6) bei der Wellenlänge λ n2 bzw. k2 sind, wobei n1, k1, n2 und k2 1,5 ≤ (nl - n2) und 1,5 ≤ (k2 - k1) erfüllen, und
die Transmissionsgrad-Einstellschicht (7) zumindest ein Element enthält, das aus der Gruppe ausgewählt ist, die aus TiO₂, ZrO₂, ZnO, Nb₂O₅, Ta₂O₅, SiO₂, Al₂O₃, Bi₂O₃, Cr-N, Ge-Si-N, Ge-Cr-N und ZnS umfasst.

2. Optisches Informationsaufzeichnungsmedium (15, 25) nach Anspruch 1, wobei
die Transmissionsgrad-Einstellschicht (7) ein Oxid von Ti als seine Hauptkomponente umfasst.

3. Optisches Informationsaufzeichnungsmedium nach Anspruch 1, bei dem n1 und k1 2,4 ≤ n1 und k1 ≤ 0,1 erfüllen.

4. Optisches Informationsaufzeichnungsmedium nach Anspruch 1, bei dem n2 und k2 n2 ≤ 2,0 und 1,0 ≤ k2 erfüllen.

5. Optisches Informationsaufzeichnungsmedium nach Anspruch 1 oder 2, bei dem ein Reflexionsgrad der ersten Informationsschicht (8) bei der Wellenlänge λ in dem Fall der Aufzeichnungsschicht (4) in einer kristallinen Phase Rc1 (%) ist, und ein Reflexionsgrad der ersten Informationsschicht (8) bei der Wellenlänge λ in dem Fall der Aufzeichnungsschicht (4) in einer amorphen Phase Ra1 (%) ist, wobei Rc1 und Ra1 Ra1 < Rc1 und 0,1 ≤ Ra1 ≤ 5 erfüllen.

6. Optisches Informationsaufzeichnungsmedium nach Anspruch 1 oder 2, bei dem ein Reflexionsgrad der ersten Informationsschicht (8) bei der Wellenlänge λ in dem Fall der Aufzeichnungsschicht (4) in einer kristallinen Phase Rc1 (%) ist, und ein Reflexionsgrad der ersten Informationsschicht (8) bei der Wellenlänge λ in dem Fall der Aufzeichnungsschicht (4) in einer amorphen Phase Ra1 (%) ist, wobei Rc1 und Ra1 Ra1 < Rc1 und 4 ≤ Rc1 ≤ 15 erfüllen.

7. Optisches Informationsaufzeichnungsmedium nach Anspruch 1 oder 2, bei dem Tc1 und Ta1 - 5 ≤ (Tc1 - Ta1) ≤ 5 erfüllen.

8. Optisches Informationsaufzeichnungsmedium nach Anspruch 1 oder 2, bei dem eine Dicke d1 der Transmissionsgrad-Einstellschicht (7) und die Wellenlänge λ (1/32) λ/n1 ≤ d1 ≤ (3/16) λ/n1 oder (17/32) λ/n1 ≤ d1 ≤ (11/16) λ/n1 erfüllen.

9. Optisches Informationsaufzeichnungsmedium nach Anspruch 1 oder 2, bei dem eine Dicke d1 der Transmissionsgrad-Einstellschicht (7) in einem Bereich von 5 nm bis 30 nm oder in einem Bereich von 80 nm bis 100 nm liegt.

10. Optisches Informationsaufzeichnungsmedium nach Anspruch 1 oder 2, bei dem die Aufzeichnungsschicht (4) aus einem Material gefertigt ist, das durch eine Zusammensetzungsformel repräsentiert ist: GeₐSb_{b}Te₃₊ₐ (wobei 0 < a ≤ 25, 1,5 ≤ b ≤ 4).

11. Optisches Informationsaufzeichnungsmedium nach Anspruch 1 oder 2, bei dem die Aufzeichnungsschicht (4) aus einem Material gefertigt ist, die durch eine Zusammensetzungsformel repräsentiert ist: (Ge-M1)ₐSb_{b}Te₃₊ₐ (wobei M1 zumindest ein Element ist, das aus der Gruppe ausgewählt ist, die aus Sn und Pb besteht; 0 < a ≤ 25; 1,5 ≤ b ≤ 4).

12. Optisches Informationsaufzeichnungsmedium nach Anspruch 1 oder 2, bei dem die Aufzeichnungsschicht (4) aus einem Material gefertigt ist, das durch eine Zusammensetzungsformel repräsentiert ist: (GeₐSb_{b}Te₃₊ₐ)_{100-c}M2_{c} (wobei M2 zumindest ein Element ist, das aus der Gruppe ausgewählt ist, die aus Si, Ti, V, Cr, Mn, Fe, Co, Ni, Cu, Se, Zr, Nb, Mo, Ru, Rh, Pd, Ag, In, Sn, Ta, W, Os, Ir, Pt, Au und Bi besteht; 0 < a ≤ 25; 1,5 ≤ b ≤ 4; 0 < c ≤ 20).

13. Optisches Informationsaufzeichnungsmedium nach Anspruch 1 oder 2, bei dem die Aufzeichnungsschicht aus einem Material gefertigt ist, das durch eine Zusammensetzungsformel repräsentiert ist: (SbxTe₁₀₀₋ₓ)_{100-y}M3_{y} (wobei M3 zumindest ein Element ist, das aus der Gruppe ausgewählt ist, die aus Ag, In, Ge, Sn, Se, Bi, Au und Mn besteht; 50 ≤ x ≤ 95; 0 < y ≤ 20).

14. Optisches Informationsaufzeichnungsmedium nach Anspruch 1 oder 2, bei dem eine Dicke der Aufzeichnungsschicht (4) in einem Bereich von 1 nm bis 9 nm liegt.

15. Optisches Informationsaufzeichnungsmedium nach Anspruch 13, bei dem die Reflexionsschicht (6) zumindest ein Element enthält, das aus der Gruppe ausgewählt ist, die aus Ag, Au, Cu und Al besteht, und eine Dicke d2 der Reflexionsschicht (6) in einem Bereich von 3 nm bis 15 nm liegt.

16. Optisches Informationsaufzeichnungsmedium nach Anspruch 14, das weiterhin eine Schutzschicht (5) an der oberen Seite umfasst, die zwischen der Aufzeichnungsschicht (4) und der Reflexionsschicht (6) angeordnet ist,
wobei die Schutzschicht (5) an der oberen Seite zumindest ein aus der Gruppe ausgewähltes enthält, die aus TiO₂, ZrO₂, ZnO, Nb₂O₅, Ta₂O₅, SiO₂, Al₂O₃, Bi₂O₃, C-N, Ti-N, Zr-N, Nb-N, Ta-N, Si-N, Ge-N, Cr-N, Al-N, Ge-Si-N, Ge-Cr-N, ZnS, SiC und C besteht.

17. Optisches Informationsaufzeichnungsmedium nach Anspruch 16, bei dem ein Brechungsindex n3 und eine Dicke d3 der Schutzschicht (5) an der oberen Seite und die Wellenlänge λ (1/64) λ/n3 ≤ d3 ≤ (15/64) λ/n3 erfüllen.

18. Optisches Informationsaufzeichnungsmedium nach Anspruch 16, bei dem eine Dicke d3 der Schutzschicht (5) an der oberen Seite in einem Bereich von 2 nm bis 40 nm liegt.

19. Optisches Informationsaufzeichnungsmedium nach Anspruch 16, das weiterhin eine Grenzflächenschicht umfasst, die an einer Grenzfläche zwischen der Schutzschicht (5) an der oberen Seite und der Aufzeichnungsschicht (4) angeordnet ist, und wobei
die Grenzflächenschicht zumindest ein aus der Gruppe ausgewähltes umfasst, die aus C-N, Ti-N, Zr-N, Nb-N, Ta-N, Si-N, Ge-N, Cr-N, Al-N, Ge-Si-N, Ge-Cr-N und C besteht.

20. Optisches Informationsaufzeichnungsmedium nach Anspruch 14, bei dem die erste Informationsschicht (8) weiterhin eine Schutzschicht (2) an der unteren Seite umfasst, die auf der Einfallseite bezüglich der Aufzeichnungsschicht (4) angeordnet ist.

21. Optisches Informationsaufzeichnungsmedium nach Anspruch 20, das weiterhin eine Grenzflächenschicht (3) umfasst, die an einer Grenzfläche zwischen der Schutzschicht (2) an der unteren Seite und der Aufzeichnungsschicht (4) angeordnet ist,
wobei die Grenzflächenschicht (3) zumindest ein aus der Gruppe ausgewähltes enthält, die aus C-N, Ti-N, Zr-N, Nb-N, Ta-N, Si-N, Ge-N, Cr-N, Al-N, Ge-Si-N, Ge-Cr-N und C besteht.

## Revendications

1. Support optique (15; 25) d'enregistrement d'informations pour enregistrer et reproduire des informations par irradiation avec un faisceau laser (16) ayant une longueur d'onde λ de 450 nm ou moins, comprenant:
un substrat (14); et
une pluralité de couches d'informations (8, 10, 13; 8, 24) formées sur le substrat (14),
où une première couche d'informations (8) qui est la plus proche d'un côté incident du faisceau laser (16) parmi la pluralité de couches d'informations inclut une couche d'enregistrement (4), une couche de réflexion (6) et une couche de réglage de transmittance (7) dans cet ordre depuis le côté incident, et
la couche d'enregistrement (4) est changée de manière réversible entre une phase cristalline et une phase amorphe par irradiation avec le faisceau laser (16),
**caractérisé en ce que**:
une transmittance de la première couche d'informations (8) à la longueur d'onde λ, dans le cas où la couche d'enregistrement (4) se trouve dans une phase cristalline, est Tc1 (%) et une transmittance de la première couche d'informations (8) à la longueur d'onde λ, dans le cas où la couche d'enregistrement (4) se trouve dans une phase amorphe, est Ta1 (%), où les Tc1 et Ta1 répondent à 46 < Tc1 et 46 < Ta1;
un indice de réfraction et un coefficient d'extinction de la couche de réglage de transmittance (7) à la longueur d'onde λ sont n1 et k1, respectivement, et un indice de réfraction et un coefficient d'extinction de la couche de réflexion (6) à la longueur d'onde λ sont n2 et k2, respectivement, où le n1, le k1, le n2 et le k2 répondent à 1,5 ≤ (n1 - n2) et 1,5 ≤ (k2 - k1), et la couche de réglage de transmittance (7) contient au moins l'un sélectionné parmi le groupe consistant en TiO₂, ZrO₂, ZnO, Nb₂O₅, Ta₂O₅, SiO₂, Al₂O₃, Bi₂O₃, Cr-N, Ge-Si-N, Ge-Cr-N et ZnS.

2. Support optique (15; 25) d'enregistrement d'informations selon la revendication 1, dans lequel
la couche de réglage de transmittance (7) contient an oxyde de Ti comme composant principal.

3. Support optique d'enregistrement d'informations selon la revendication 1, dans lequel le n1 et le k1 répondent à 2,4 ≤ n1 et k1 ≤ 0,1.

4. Support optique d'enregistrement d'informations selon la revendication 1, dans lequel le n2 et le k2 répondent à n2 ≤ 2,0 et 1,0 ≤ k2.

5. Support optique d'enregistrement d'informations selon la revendication 1 ou 2, dans lequel une réflectance de la première couche d'informations (8) à la longueur d'onde λ, dans le cas où la couche d'enregistrement (4) se trouve dans une phase cristalline, est Rc1 (%), et une réflectance de la première couche d'informations (8) à la longueur d'onde λ, dans le cas où la couche d'enregistrement (4) se trouve dans une phase amorphe, est Ra1 (%), le Rc1 et le Ra1 répondent à Ra1 < Rc1 et 0,1 ≤ Ra1 ≤ 5.

6. Support optique d'enregistrement d'informations selon la revendication 1 ou 2, dans lequel une réflectance de la première couche d'informations (8) à la longueur d'onde λ, dans le cas où la couche d'enregistrement (4) se trouve dans une phase cristalline, est Rc1 (%), et une réflectance de la première couche d'informations (8) à la longueur d'onde λ, dans le cas où la couche d'enregistrement (4) se trouve dans une phase amorphe, est Ra1 (%), le Rc1 et le Ra1 répondent à Ra1 < Rc1 et 4 ≤ Rc1 ≤ 15.

7. Support optique d'enregistrement d'informations selon la revendication 1 ou 2, dans lequel le Tc1 et le Ta1 répondent à-5 ≤ (Tc1 -Ta1) ≤ 5.

8. Support optique d'enregistrement d'informations selon la revendication 1 ou 2, dans lequel une épaisseur d1 de la couche de réglage de transmittance (7) et la longueur d'onde λ répondent à (1/32)λ/n1 ≤ d1 ≤ (3/16)λ/n1 ou (17/32)λ/n1 ≤ d1 ≤ (11/16)λn1.

9. Support optique d'enregistrement d'informations selon la revendication 1 ou 2, dans lequel une épaisseur d1 de la couche de réglage de transmittance (7) se trouve dans une gamme allant de 5 nm à 30 nm ou dans une gamme allant de 80 nm à 100 nm.

10. Support optique d'enregistrement d'informations selon la revendication 1 ou 2, dans lequel la couche d'enregistrement (4) est faite d'un matériau représenté par une formule de composition: GeₐSb_{b}Te₃₊ₐ (où 0 < a ≤ 25, 1,5 ≤ b ≤ 4).

11. Support optique d'enregistrement d'informations selon la revendication 1 ou 2, dans lequel la couche d'enregistrement (4) est faite d'un matériau représenté par une formule de composition: (Ge - Ml)ₐSb_{b}Te₃₊ₐ (où M1 est au moins un élément sélectionné parmi le groupe consistant en Sn et Pb; 0 < a ≤ 25; 1,5 ≤ b ≤ 4).

12. Support optique d'enregistrement d'informations selon la revendication 1 ou 2, dans lequel la couche d'enregistrement (4) est faite d'un matériau représenté par une formule de composition: (GeₐSb_{b}Te₃₊ₐ)_{100-c}M2_{c} (où M2 est au moins un élément sélectionné parmi le groupe consistant en Si, Ti, V, Cr, Mn, Fe, Co, Ni, Cu, Se, Zr, Nb, Mo, Ru, Rh, Pd, Ag, In, Sn, Ta, W, Os, Ir, Pt, Au et Bi; 0 < a ≤ 25; 1,5 ≤ b ≤ 4; 0 < c ≤ 20).

13. Support optique d'enregistrement d'informations selon la revendication 1 ou 2, dans lequel la couche d'enregistrement (4) est faite d'un matériau représenté par une formule de composition: (SbₓTe₁₀₀₋ₓ)_{100-y}M3_{y} (où M3 est au moins un élément sélectionné parmi le groupe consistant en Ag, In, Ge, Sn, Se, Bi, Au et Mn; 50 ≤ x ≤ 95; 0 < y ≤20).

14. Support optique d'enregistrement d'informations selon la revendication 1 ou 2, dans lequel une épaisseur de la couche d'enregistrement (4) se trouve dans une gamme allant de 1 nm à 9 nm.

15. Support optique d'enregistrement d'informations selon la revendication 13, dans lequel la couche de réflexion (6) contient au moins un élément sélectionné parmi le groupe consistant en Ag, Au, Cu et Al, et une épaisseur d2 de la couche de réflexion (6) se trouve dans une gamme allant de 3 nm à 15 nm.

16. Support optique d'enregistrement d'informations selon la revendication 14, comprenant en plus une couche de protection (5) du côté supérieur disposée entre la couche d'enregistrement (4) et la couche de réflexion (6),
la couche de protection (5) du côté supérieur contenant au moins l'un sélectionné parmi le groupe consistant en TiO₂, ZrO₂, ZnO, Nb₂O₅, Ta₂O₅, SiO₂, Al₂O₃, Bi₂O₃, C-N, Ti-N, Zr-N, Nb-N, Ta-N, Si-N, Ge-N, Cr-N, Al-N, Ge-Si-N, Ge-Cr-N, ZnS, SiC et C.

17. Support optique d'enregistrement d'informations selon la revendication 16, dans lequel un indice de réfraction n3 et une épaisseur d3 de la couche de protection (5) du côté supérieur et la longueur d'onde λ répondent à (1/64)λ/n3 ≤d3 ≤ (15/64)λ/n3.

18. Support optique d'enregistrement d'informations selon la revendication 16, dans lequel une épaisseur d3 de la couche de protection (5) du côté supérieur se trouve dans une gamme allant de 2 nm à 40 nm.

19. Support optique d'enregistrement d'informations selon la revendication 16, comprenant en plus une couche d'interface disposée sur une interface entre la couche de protection (5) du côté supérieur et la couche d'enregistrement (4), et
la couche d'interface contient au moins l'un sélectionné parmi le groupe consistant en C-N, TiN, Zr-N, Nb-N, Ta-N, Si-N, Ge-N, Cr-N, Al-N, Ge-Si-N, Ge-Cr-N et C.

20. Support optique d'enregistrement d'informations selon la revendication 14, dans lequel la première couche d'informations (8) inclut en plus une couche de protection (2) du côté inférieur disposée sur le côté incident par rapport à la couche d'enregistrement (4).

21. Support optique d'enregistrement d'informations selon la revendication 20, comprenant en plus une couche d'interface (3) disposée sur une interface entre la couche de protection (2) du côté inférieur et la couche d'enregistrement (4),
où la couche d'interface (3) contient au moins l'un sélectionné parmi le groupe consistant en C-N, Ti-N, Zr-N, Nb-N, Ta-N, Si-N, Ge-N, Cr-N, Al-N, Ge-Si-N, Ge-Cr-N et C.
